# EUROPÄISCHE PATENTSCHRIFT

(11) **EP 3 256 243 B1**
(45) Veröffentlichungstag und Bekanntmachung des Hinweises auf die Patenterteilung: **20.04.2022**
(21) Anmeldenummer: 16703976.7
(22) Anmeldetag: 11.02.2016
(51) Int. Cl.: B01J 19/02, G01N 30/84, B01J 19/00, B01J 8/02, B01J 6/00, B01J 19/24, G01N 30/02

(54) **VERWENDUNG EINES REAKTORS UND VORRICHTUNG ZUR QUANTITATIVEN GEWINNUNG VON MOLEKULAREM WASSERSTOFF AUS SUBSTANZEN**
USE OF A REACTOR AND DEVICE FOR QUANTITATIVELY OBTAINING MOLECULAR HYDROGEN FROM SUBSTANCES
UTILISATION D'UN RÉACTEUR ET DISPOSITIF D'EXTRACTION QUANTITATIVE D'HYDROGÈNE MOLÉCULAIRE À PARTIR DE SUBSTANCES

(30) Priorität: 13.02.2015 DE 102015102126; 25.02.2015 DE 102015102710
(43) Veröffentlichungstag der Anmeldung: 20.12.2017
(73) Patentinhaber: Thermo Fisher Scientific (Bremen) GmbH, 28199 Bremen (DE)
(72) Erfinder: GEHRE, Matthias, 04159 Leipzig (DE); RENPENNING, Julian, 04315 Leipzig (DE); KÜMMEL, Steffen, 04105 Leipzig (DE)
(86) Internationale Anmeldenummer: PCT/EP2016/052902
(87) Internationale Veröffentlichungsnummer: WO 2016/128510

(56) Entgegenhaltungen:
- EP-A2- 0 258 907
- DE-C1- 19 816 348
- GB-A- 479 438
- SIMON D. KELLY, KARL D. HEATON, PAUL BRERETON: "Deuterium/hydrogen isotope ratio measurement of water and organic samples by continuous-flow isotope ratio mass spectrometry using chromium as the reducing agent in an elemental analyser", RAPID COMMUNICATIONS IN MASS SPECTROMETRY, Bd. 15, Nr. 15, 4. Juli 2001 (2001-07-04), Seiten 1283-1286, XP002757181,
- SHOUAKAR-STASH ORFAN; DRIMMIE ROBERT J: "Online methodology for determining compound-specific hydrogen stable isotope ratios of trichloroethene and 1,2-cis-dichloroethene by continuous-flow isotope ratio mass spectrometry", RAPID COMMUNICATIONS IN MASS SPECTROMETRY, Bd. 27, Nr. 12, 30. Juni 2013 (2013-06-30) , Seiten 1335-1344, XP002757182, in der Anmeldung erwähnt
- GEHRE M ET AL: "Contnuous flow 2H/1H and 18O/16O analysis of water samples with dual inlet precision", RAPID COMMUNICATIONS IN MASS SPECTROMETRY, JOHN WILEY & SONS, GB, Bd. 18, 1. November 2004 (2004-11-01), Seiten 2650-2660, XP002571393, ISSN: 0951-4198, DOI: 10.1002/RCM.1672 [gefunden am 2004-10-12] in der Anmeldung erwähnt

## Beschreibung

Die Erfindung betrifft die Verwendung eines Reaktors und Vorrichtungen zur quantitativen Gewinnung von molekularem Wasserstoff aus wasserstoffhaltigen festen, flüssigen und gasförmigen Substanzen, die Heteroatome aufweisen.

Hierbei werden Reaktoren mit chromenthaltendem Material verwendet. Bei dem chromenthaltendem Material kann es sich um eine chromenthaltende Packung handeln. Die Reaktoren sind bevorzugt hitzebeständig. Zur Gewinnung des molekularen Wasserstoffs aus festen Substanzen können diese zunächst mit Lösungsmitteln gelöst werden. Sie können danach zunächst einer gaschromatografischen Trennung zugeführt werden. Der Prozess der Gewinnung des molekularen Wasserstoffs aus wasserstoffhaltigen festen, flüssigen und gasförmigen Substanzen, die Heteroatome aufweisen, kann in Low-Flow-Systemen erfolgen. Hierbei wird der Reaktor mit geringem Gasfluss betrieben, der z. B. nur 0,5 ml/min bis 10 ml/min betragen kann. Solche geringen Gasflüsse werden insbesondere dann benutzt, wenn im Prozess zur Gewinnung des molekularen Wasserstoffs auch die Gaschromatografie verwendet wird. Gegenstand der Erfindung ist auch die Verwendung des Reaktors, Verfahrens und der Vorrichtung zur Messung des Isotopenverhältnisses von Wasserstoff (δ²H) der Substanz, aus der der molekulare Wasserstoff gewonnen wurde. Die Messung kann mittels Online-Apparaturen zur Elementaranalyse (EA), Online-Apparaturen zur Hochtemperaturumwandlung (in HTC-Systemen) und Online- Elementaranalysatoren mit Hochtemperaturumwandlung (HTC/EA) erfolgen. Eine komponentenspezifische und verbindungsspezifische Messung kann mittels Online-Apparaturen zur Hochtemperaturumwandlung (in HTC-Systemen) nach (gas)chromatografischer Auftrennung erfolgen.

Online Methoden sind für die Isotopenverhältnismessung von Elementen wie Wasserstoff, Kohlenstoff, Stickstoff und Sauerstoff bekannt. Hierbei können auch komponentenspezifische Analysen vorgenommen werden, insbesondere wenn vorher eine chromatografische Auftrennung einer zu untersuchenden Substanz erfolgt ist. Die Analyse von Wasserstoff (H₂) kann einerseits durch direkte Elementaranalyse erfolgen. Andererseits kann die Analyse durch Pyrolyse der wasserstoffhaltigen Probe oder der Komponenten der wasserstoffhaltigen Probe zu H₂ mit anschließender stabiler Isotopenverhältnis-Massenspektrometrie erfolgen unter Verwendung von Massenspektrometern, insbesondere Massenspektrometern zur Bestimmung von Isotopenverhältnissen (IRMS) wie DI- IRMS (dual-inlet isotope-ratio mass spectrometer) oder CF-IRMS (continuous-flow isotope-ratio mass spectrometer).

Handelsübliche Elementaranalysatoren (EA) mit Hochtemperaturumwandlung (HTC) gestatten insbesondere die vorteilhafte Online- bzw. Continuous-Flow-Analyse von Sauerstoff- und Wasserstoff-Isotopenverhältnissen. Die Systeme nutzen die Pyrolyse, um Sauerstoff in CO und Wasserstoff in H₂ umzuwandeln. Die Gase werden danach durch isotherme Gaschromatographie getrennt und gegen Referenzgas gemessen.

Bei der Hochtemperaturumwandlung handelt es sich um einen Pyrolyseprozess, bei dem die Pyrolyse zu einer vollständigen Umsetzung des zu pyrolysierenden Materials führt. Es ist also bei der Hochtemperaturumwandlung sichergestellt, dass nach der Umwandlung des Ausgangsmaterials durch die Pyrolyse keine Reste des Ausgangsmaterials mehr vorhanden sind. Insbesondere bei einer nachfolgenden Elementanalyse z. B. mit Hilfe der Massenspektrometrie ist dies wichtig, um so unverfälschte Aussagen über das zu untersuchende Ausgangsmaterial machen zu können.

Handelsübliche GC/C (Gaschromatografie mit anschließender Verbrennung) und insbesondere GC/HTC (Gaschromatographie mit anschließender Hochtemperaturumwandlung) ermöglicht ebenfalls insbesondere die vorteilhafte Bestimmung von Kohlenstoff- und Wasserstoff-Isotopenverhältnissen bei der, Continuous-Flow' Online-Analyse. Die Systeme nutzen die 'on-the-fly' Oxidation- und Pyrolyse-Reaktion um Kohlenstoff zu CO₂ bzw. CO und Wasserstoff in H₂ umzuwandeln. Die Isotopenverhältnisse der Gase (CO₂, CO oder H₂) werden gegen entsprechende Referenzgase gemessen

In Rapid. Comm. Mass. Spectrom. 2004; 18: 2650-2660 von Matthias Gehre et al. wird z. B. unter Verwendung eines doppelwandigen Reaktors mit einer Glaskohlenstofffüllung die Online-Continuous-Flow-Analyse von Sauerstoff- und Wasserstoff-Isotopenverhältnissen von Wasserproben mittels DI- IRMS beschrieben. Doppelwandige Pyrolysereaktoren sind weiterhin auch aus DE 198 16 348 C1 zur massenspektrometrischen online Bestimmung der Sauerstoffisotopenzusammensetzung bekannt.

Zur Messung des komponentenspezifischen Isotopenverhältnisses von Wasserstoff existieren zwei Standardverfahren. Eines benutzt einen leeren Keramikreaktor und pyrolysiert die Proben zu H₂ bei einer Temperatur von 1400-1450°C. Das zweite Verfahren verwendet einen Quarzreaktor gefüllt mit Chrompulver bei einer Temperatur von 800 bis 1000 °C. Diese letztere Ausführung wurde im Jahr 1994 durch die Fa. Micromass Ltd. (Philip Antony Freedman, Timothy Graham Brockwell) patentiert (EP 0 729 577 A1). Der Reaktor besitzt einen Innendurmesser von 0,5 mm. Zur Messung des Isotopenverhältnisses von Wasserstoff polyhalogenierter Verbindungen sind z. B. Chrom-Reaktoren ebenfalls literaturbekannt (Wolfgang Armbruster et al, Anal. Bioana. Chem (2006) 384: 237-243). Diese Reaktoren können zur Pyrolyse bei 800 bis 1050°C eingesetzt werden. Beide Verfahren sind problematisch, denn Verbindungen, die Heteroatome (N, S, Cl, Br, I, P, F u. a.) aufweisen, liefern keine vollständige Wasserstoffausbeute (ca. 60-80%) sondern bilden bei diesen Temperaturen chemische wasserstoffhaltige Nebenprodukte. Das gilt insbesondere für stickstoffhaltige und halogenhaltige Ausgangssubstanzen. Sie bilden die Nebenprodukte wie HCN und HX (z. B. HCl) z.B. unter den Bedingungen der Elementaranalysatoren mit Hochtemperaturumwandlung (z. B. TC/EA der Firma Thermo Fisher Scientific (Bremen)) und in HTC-Systemen und können eine isotopische Fraktionierung bewirken, dass heißt eine Verschiebung der Häufigkeit der Isotope im gebildeten molekularen Wasserstoff im Vergleich zum Wasserstoff der zu untersuchenden Substanz. Demzufolge sinkt die Wasserstoffausbeute signifikant unter 100%. Auf EP 0 729 577 A1 beruhende wissenschaftliche Veröffentlichungen, zeigen die Wirksamkeit der Methode des zweiten Verfahrens an ausgewählten Verbindungen innerhalb des beschriebenen Temperaturbereiches (800-1000°C), mit entsprechender Limitierung innerhalb des beschriebenen Temperaturbereiches (u. a. Kuder, T.; Philp, P., Demonstration of compound-specific isotope analysis of hydrogen isotope ratios in chlorinated ethenes. Environ Sci Technol 2013, 47, (3), 1461-7.; Shouakar-Stash, O.; Drimmie, R. J., Online methodology for determining compound-specific hydrogen stable isotope ratios of trichloroethene and 1,2-cis-dichloroethene by continuous-flow isotope ratio mass spectrometry. Rapid communications in mass spectrometry : RCM 2013, 27, (12), 1335-44.).

Aus S.D. Kelly et al., Rapid Comm. Mass. Spectrom. 2001;15, 1283-1286 ist auch die Umwandlung von Proben in einem Reaktor zu Wasserstoffgas bei Temperaturen über 1100°C über Chrom bekannt. Wie das so erzeugte Wasserstoffgas möglichst vollständig einer weiteren Analyse zugeführt werden kann, ist nicht beschrieben.

Der Erfindung lag deshalb die Aufgabe zugrunde, effektive Verfahren und Mittel, die eine nahezu 100%ige Gewinnung von molekularem Wasserstoff bewirken, zu finden, die dann eine effiziente, genaue Elementaranalyse und Messung des Isotopenverhältnisses von Wasserstoff (δ²H) ermöglichen.

Der Erfindung lag weiter die Aufgabe zugrunde, effektive Verfahren und Mittel für GC/HTC-System (Gaschromatographie mit anschließender Hochtemperaturumwandlung) zu finden, die eine nahezu 100%ige Gewinnung von molekularem Wasserstoff bewirken, und die anschließend genaue komponenten- und verbindungsspezifische Messungen des Isotopenverhältnisses von Wasserstoff (δ²H) ermöglichen.

Es wurde gefunden, dass heißes Chrom (≥ 1100°C) die Ausbeute an molekularem Wasserstoff bei der pyrolytischen Reaktion wasserstoffhaltiger fester, flüssiger und gasförmiger Verbindungen mit Heteroatomen, signifikant erhöht und eine nahezu 100%ige Ausbeute liefert, wobei reaktive Elemente mit Ausnahme des Wasserstoffs irreversibel und quantitativ entfernt sind. Als reaktive Elemente werden alle Elemente verstanden, die bereit sind, mit weiteren ebenfalls reaktiven Elementen eine Reaktion einzugehen.

Gegenstand der Erfindung ist daher die Verwendung von Reaktoren mit chromenthaltendem Material zur quantitativen Gewinnung von molekularem Wasserstoff aus festen, flüssigen oder gasförmigen Substanzen, die Heteroatome aufweisen, durch Pyrolyse gemäß dem Anspruch 1. Hierbei wird zur Pyrolyse der Substanzen in dem Reaktor eine Zone mit Temperaturen oberhalb von 1100°C erzeugt. In dieser Zone mit Temperaturen oberhalb von 1100°C ist eine für den Pyrolyseprozess der Substanzen zugängliche reaktive Chromschicht des chromenthaltenden Materials des Reaktors zumindest teilweise angeordnet.

Der Reaktor, dessen erfindungsgemäße Verwendung beansprucht wird, weist eine Reaktionskammer mit chromenthaltendem Material auf. Eine solche Reaktorkammer besitzt einen Einlass für die zu pyrolisierende Substanz, aus der der molekulare Wasserstoff gewonnen werden soll. Weiter besitzt die Reaktorkammer einen Reaktorausgang, aus dem das gebildete Wasserstoffgas austreten kann. Die Reaktorkammer kann als Reaktorrohr ausgeführt sein. Bei einem Reaktorrohr befinden sich der Einlass für die zu pyrolisierende Substanz und der Reaktorausgang, aus dem das gebildete Wasserstoffgas austreten kann, an gegenüberliegenden Enden des Reaktorrohres. Zwischen dem Einlass für die zu pyrolisierende Substanz und dem Reaktorausgang, aus dem das gebildete Wasserstoffgas austreten kann, erstreckt sich dann die Längsachse des Reaktorrohres. Meistens weist ein Reaktorrohr in Richtung seiner Längsachse seine größte Länge auf.

Der Reaktor, dessen erfindungsgemäße Verwendung beansprucht wird, kann mindestens ein Reaktorrohr aufweisen. Hierbei kann die Reaktorkammer des Reaktors als Reaktorrohr ausgeführt sein.

In einer beispielhaften Verwendung eines Reaktors erfolgt die Pyrolyse der Substanzen unter Einsatz eines Trägergases. Bei dem Trägergas handelt es sich bevorzugt um ein inertes Trägergas, insbesondere Edelgase. Ganz besonders bevorzugt wird Helium als Trägergas genutzt.

Es gibt verschiedene Formen, wie das chromenthaltende Material in dem Reaktor mit chromenthaltendem Material vorliegen kann.

Eine erste Form ist zum Beispiel, dass der Reaktor eine chromenthaltende Füllung aufweist. Diese Füllung befindet sich dann im Inneren des Reaktors. Insbesondere kann es sich bei der chromenthaltende Füllung um eine chromenthaltende Packung handeln. Das chromenthaltende Material kann hierbei mit weiteren Materialien zusammen im Reaktor gepackt worden sein. Eine solche chromenthaltende Packung wird insbesondere bei Reaktoren mit einem Reaktorrohr benutzt, in dem die chromenthaltende Packung angeordnet wird. Hierbei kann das chromenthaltende Material in Längsrichtung oder senkrecht zur Längsrichtung des Reaktorrohres angeordnet sein. Auch die weiteren Materialien, die im Reaktorrohr dazu gepackt worden sind und auch weitere chromenthaltende Materialien umfassen können, können in Längsrichtung oder senkrecht zur Längsrichtung des Reaktorrohres angeordnet sein. Vorzugsweise werden das chromenthaltene Material und die anderen gepackten Materialien mindestens in einem Teilbereich des Reaktorrohrs in Richtung der Längsachse in der gleichen Richtung gepackt. In einer bevorzugten Ausführungsform werden im gesamten Reaktorrohr sowohl die chromenthaltende Packung als auch die weiteren Materialien senkrecht zur Längsrichtung des Reaktors angeordnet. Weitere Formen, wie eine chromenthaltende Füllung in das Innere des Reaktors gebracht werden können, sind zum Beispiel Schütten, Einspritzen, Laminieren und Pressen.

Eine zweite Form, wie das chromenthaltende Material in dem Reaktor mit chromenthaltendem Material vorliegen kann, ist zum Beispiel, dass mindestens ein Abschnitt einer Reaktorinnenwand eine chromenthaltende Beschichtung aufweist. Bei einem Reaktorrohr kann eine Reaktorinnenwand in Längsrichtung des Reaktorrohres eine Beschichtung aufweisen, die beispielsweise über den gesamten Rohrumfang vorliegen kann. Ebenso kann die Beschichtung auch nur über, vorzugsweise gleichmäßig verteilte, Segmente des Rohrumfangs vorliegen.

Eine dritte Form, wie das chromenthaltende Material in dem Reaktor mit chromenthaltenden Material vorliegen kann, ist zum Beispiel, dass mindestens ein Abschnitt einer Reaktorwand zumindest an seiner Innenseite aus chromenthaltendem Material besteht. Der Abschnitt der Reaktorwand kann vollständig aus dem chromenthaltenden Material bestehen. Bei einem Reaktorrohr kann eine Reaktorinnenwand in Längsrichtung des Reaktorrohres aus chromenthaltendem Material über eine gewisse Länge bestehen, wobei das chromenthaltende Material beispielsweise über den gesamten Rohrumfang vorliegen kann. Ebenso kann das chromenthaltende Material auch nur über, vorzugsweise gleichmäßig verteilte, Segmente des Rohrumfangs vorliegen.

Eine vierte Form, wie das chromenthaltende Material in dem Reaktor mit chromenthaltenden Material vorliegen kann, ist zum Beispiel, dass mindestens in einem Abschnitt einer Reaktorwand zumindest an seiner Innenseite ein chromenthaltendes Material eingelassen ist. Hierbei ist wichtig, dass das eingelassene chromenthaltende Material so an der Innenseite der Reaktorwand eingelassen ist, dass mindestens eine reaktive Chromschicht des chromenthaltenden Materials so aus der Reaktorwand hervorsteht, dass sie für den Pyrolyseprozess der Substanzen, aus denen der molekulare Wasserstoff gewonnen werden soll, im Reaktorinneren zugänglich ist und an diesem teilnehmen kann. Das chromenthaltene Material kann z.B. in das Material der Reaktorwand aus z. B. Quarz oder einer Keramik eingegossen worden sein und hierbei z. B. als Platte oder Draht ausgeführt sein. Das chromenthaltene Material kann hierbei aus der Reaktorwand ins Innere des Reaktors hinausragen und so mindestens mit seiner so vergrößerten Oberfläche am Pyrolyseprozess beteiligt sein.

In einer beispielhaften Verwendung eines Reaktors besteht das chromenthaltende Material des Reaktors aus reinem Chrom.

In einer anderen beispielhaften Verwendung eines Reaktors besteht dass das reine Chrom aus Chrompulver oder Chromgranulat.

In einer weiteren beispielhaften Verwendung eines Reaktors besteht das chromenthaltende Material des Reaktors aus Chrom und anderen temperaturstabilen Materialien, die keinen Wasserstoff enthalten und/oder nicht mit molekularem Wasserstoff oberhalb von 1100°C reagieren. In einem Beispiel weisen diese temperaturbeständigen Materialien kein Silizium oder Si-Verbindungen auf. Dies ist insbesondere vorteilhaft, wenn aus halogenhaltigen Substanzen molekularer Wasserstoff gewonnen werden soll.

In einer weiteren beispielhaften Verwendung eines Reaktors besteht das chromenthaltende Material des Reaktors aus mit Chrom beschichteten anderen temperaturstabilen Materialien, die keinen Wasserstoff enthalten und/oder nicht mit molekularem Wasserstoff oberhalb von 1100°C reagieren.

In einer weiteren beispielhaften Verwendung eines Reaktors besteht die chromenthaltende Packung des Reaktors aus Chrom und anderen temperaturstabilen Materialien, die abschnittsweise im Reaktor gepackt vorliegen, wobei die anderen temperaturstabilen Materialien keinen Wasserstoff enthalten und/oder nicht mit molekularem Wasserstoff oberhalb von 1100°C reagieren.

In einer weiteren beispielhaften Verwendung eines Reaktors handelt es sich bei dem Chrom, das abschnittsweise im Reaktor gepackt vorliegt, um mindestens eine Schicht aus reinem Chrom.

In einer beispielhaften Verwendung eines Reaktors gewährleistet das chromenthaltende Material des Reaktors einen Trägergasfluss von bis zu 10 ml/min.

In einer weiteren beispielhaften Verwendung eines Reaktors gewährleistet das chromenthaltende Material des Reaktors einen Trägergasfluss von bis zu 300 ml/min.

In einer anderen beispielhaften Verwendung eines Reaktors gewährleistet das chromenthaltende Material des Reaktors einen Trägergasfluss von bis zu 1000 ml/min.

In einer beispielhaften Verwendung eines Reaktors liegt in der Zone mit Temperaturen oberhalb von 1100°C in dem Reaktor die Temperatur zwischen 1100°C und 1800°C. Bevorzugt liegt die Temperatur zwischen 1200°C und 1500°C und besonders bevorzugt zwischen 1250°C und 1400°C.

In einer beispielhaften Verwendung eines Reaktors wird die Zone mit Temperaturen oberhalb von 1100°C nur in einem Teilvolumen des Reaktors erzeugt, dass maximal 50 % des Reaktorvolumens ausmacht. In einem anderen Beispiel macht das Teilvolumen maximal 70 % des Reaktorvolumens aus, in einer weiteren Ausführungsform maximal 30 % des Reaktorvolumens.

In einer beispielhaften Verwendung eines Reaktors umfasst die Zone mit Temperaturen oberhalb von 1100°C die Mitte des mindestens einen Reaktorrohrs in Richtung seiner Längsachse.

In einer beispielhaften Verwendung eines Reaktors erstreckt sich die Zone mit Temperaturen oberhalb von 1100°C in Richtung der Längsachse des Reaktorrohres über maximal 50 % der Länge des Reaktorrohres. In einem weiteren Beispiel erstreckt sich die Zone mit Temperaturen oberhalb von 1100°C in Richtung der Längsachse des Reaktorrohres über maximal 70 % der Länge des Reaktorrohres. In einem anderen Beispiel erstreckt sich die Zone mit Temperaturen oberhalb von 1100°C in Richtung der Längsachse des Reaktorrohres über maximal 30 % der Länge des Reaktorrohres.

In einer beispielhaften Verwendung eines Reaktors liegt das chromenthaltende Material des Reaktors in 25 % bis 95 % der Zone mit Temperaturen über 1100°C vor. In einer bevorzugten Ausführungsform liegt das chromenthaltende Material des Reaktors in 35 % bis 90 % der Zone mit Temperaturen über 1100°C vor. In einem Beispiel liegt das chromenthaltende Material des Reaktors in 40 % bis 60 % der Zone mit Temperaturen über 1100°C vor.

In einer beispielhaften Verwendung eines Reaktors erstreckt sich das chromenthaltende Material des Reaktorrohres über 30 % bis 70 % der Länge der Zone mit Temperaturen über 1100°C in Längsrichtung des Reaktorrohres. In einer beispielhaften Verwendung eines Reaktors erstreckt sich das chromenthaltende Material des Reaktorrohres über 40 % bis 60 % der Länge der Zone mit Temperaturen über 1100°C in Längsrichtung des Reaktorrohres.

In einer beispielhaften Verwendung eines Reaktors ist die Längsachse des Reaktorrohres vertikal ausgerichtet und das chromenthaltende Material des Reaktorrohres liegt als horizontale Schicht ausgebildet vor.

In einer beispielhaften Verwendung eines Reaktors erstreckt sich das chromenthaltende Material des Reaktorrohres über die 40 % bis 60 % der Länge der Zone mit Temperaturen über 1100°C in Längsrichtung des Reaktorrohres, die zum Ausgang des Reaktorrohres angeordnet ist. In einer anderen beispielhaften Verwendung eines Reaktors erstreckt sich das chromenthaltende Material des Reaktorrohres über die 30 % bis 80 % der Länge der Zone mit Temperaturen über 1100°C in Längsrichtung des Reaktorrohres, die zum Ausgang des Reaktorrohres angeordnet ist.

In einer beispielhaften Verwendung eines Reaktors sind zwischen dem chromenthaltendem Material der Reaktorkammer und dem Ausgang der Reaktorkammer absatzweise gepackt temperaturstabile Materialien angeordnet, die keinen Wasserstoff enthalten und/oder nicht mit molekularem Wasserstoff bei Temperaturen ≥ 1100°C reagieren.

Bei der erfindungsgemäßen Verwendung eines Reaktors ist zwischen dem chromenthaltendem Material der Reaktorkammer, das sich während der Pyrolyse in der Zone mit dem Temperaturen oberhalb von 1100°C befindet, und dem Ausgang der Reaktorkammer weiteres chromenthaltendes Material der Reaktorkammer angeordnet, das in einer Temperaturzone angeordnet ist, die an die Zone mit dem Temperaturen oberhalb von 1100°C angrenzt und in der die Temperatur bis zu einer Temperatur von 500°C, vorzugsweise 300°C und besonders vorzugsweise 180°C zum Ausgang der Reaktorkammer hin abnimmt. Insbesondere kann hierbei die Temperatur gleichmäßig in der Zone abnehmen. Ebenso kann die Temperatur mit niedrigeren Temperaturen stärker abnehmen. Bei dem chromenthaltenden Material in beiden Temperaturzonen kann es sich insbesondere um das gleiche chromenthaltende Material handeln. Dieses ist insbesondere als eine einzige einteilige Komponente der Reaktorkammer ausgebildet. Bevorzugt weist die Zone, in der die Temperatur von 1100°C weiter abnimmt, kleinere Dimensionen auf als die Zone mit dem Temperaturen oberhalb von 1100°C. Insbesondere können die Abmessungen beider Zonen so gewählt sein, dass die zu pyrolysierende Substanz und die aus ihr entstehenden Pyrolyseprodukte kürzer in die Zone der Reaktorkammer verweilen, in der die Temperatur von 1100°C weiter abnimmt, als in der Zone mit Temperaturen oberhalb von 1100°C. Insbesondere kann die Verweilzeit in die Zone der Reaktorkammer, in der die Temperatur von 1100°C weiter abnimmt, nur 50 % bis 70 % der Verweilzeit in der Zone mit Temperaturen oberhalb von 1100°C betragen.

In einer bevorzugten Ausführungsform der erfindungsgemäßen Verwendung eines Reaktors ist zwischen dem chromenthaltendem Material der Reaktorrohres, das sich während der Pyrolyse in der Zone mit dem Temperaturen oberhalb von 1100°C befindet, und dem Ausgang der Reaktorrohres weiteres chromenthaltendes Material der Reaktorrohres angeordnet, das in einer Temperaturzone angeordnet ist, die an die Zone mit dem Temperaturen oberhalb von 1100°C angrenzt und in der die Temperatur bis zu einer Temperatur von 500°C, vorzugsweise 300°C und besonders vorzugsweise 180°C zum Ausgang des Reaktorrohres hin abnimmt. Insbesondere kann hierbei die Temperatur gleichmäßig in der Zone abnehmen. Ebenso kann die Temperatur mit niedrigeren Temperaturen stärker abnehmen. Bei dem chromenthaltenden Material in beiden Temperaturzonen kann es sich insbesondere um das gleiche chromenthaltende Material handeln. Dieses ist insbesondere als eine einzige einteilige Komponente des Reaktorrohres ausgebildet. Bevorzugt ist die Zone, in der die Temperatur von 1100°C weiter abnimmt, in Längsrichtung des Reaktorrohres kürzer als die Zone mit dem Temperaturen oberhalb von 1100°C. Die Zone, in der die Temperatur von 1100°C weiter abnimmt, kann in Längsrichtung des Reaktorrohres eine Länge aufweisen, die zwischen 40 % und 100 % der Länge entspricht, die die Zone mit dem Temperaturen oberhalb von 1100°C in Längsrichtung des Reaktorrohres aufweist. Insbesondere kann die Zone, in der die Temperatur von 1100°C weiter abnimmt, in Längsrichtung des Reaktorrohres eine Länge aufweisen, die zwischen 50 % und 85 % der Länge entspricht, die die Zone mit dem Temperaturen oberhalb von 1100°C in Längsrichtung des Reaktorrohres aufweist. Bevorzugt kann die Zone, in der die Temperatur von 1100°C weiter abnimmt, in Längsrichtung des Reaktorrohres eine Länge aufweisen, die zwischen 60 % und 75 % der Länge entspricht, die die Zone mit dem Temperaturen oberhalb von 1100°C in Längsrichtung des Reaktorrohres aufweist.

In einer beispielhaften Verwendung eines Reaktors macht die Zone mit Temperaturen oberhalb von 1100°C, die im Reaktor erzeugt wird, minimal 70 % des Reaktorvolumens aus. In einer bevorzugten Ausführungsform der erfindungsgemäßen Verwendung eines Reaktors macht die Zone mit Temperaturen oberhalb von 1100°C, die im Reaktor erzeugt wird, minimal 90 % des Reaktorvolumens aus. In einer besonders bevorzugten Ausführungsform der erfindungsgemäßen Verwendung eines Reaktors macht die Zone mit Temperaturen oberhalb von 1100°C, die im Reaktor erzeugt wird, minimal 95 % des Reaktorvolumens aus.

In einer beispielhaften Verwendung eines Reaktors erstreckt sich die Zone mit Temperaturen oberhalb von 1100°C in Richtung der Längsachse des Reaktorrohres über minimal 80 % der Länge des Reaktorrohres. In Z einem Beispiel der Verwendung eines Reaktors erstreckt sich die Zone mit Temperaturen oberhalb von 1100°C in Richtung der Längsachse des Reaktorrohres über minimal 90 % der Länge des Reaktorrohres. In einem weiteren Beispiel Verwendung eines Reaktors erstreckt sich die Zone mit Temperaturen oberhalb von 1100 °C in Richtung der Längsachse des Reaktorrohres über minimal 95 % der Länge des Reaktorrohres.

In einer beispielhaften Verwendung eines Reaktors ist zwischen dem chromenthaltendem Material der Reaktorkammer, das sich während der Pyrolyse in der Zone mit dem Temperaturen oberhalb von 1100°C befindet, und dem Eingang der Reaktorkammer weiteres chromenthaltendes Material der Reaktorkammer angeordnet. Bevorzugt ist dieses chromenthaltende Material in einer Temperaturzone angeordnet, die an die Zone mit dem Temperaturen oberhalb von 1100°C angrenzt und in der die Temperatur bis zu einer Temperatur von 500°C, vorzugsweise 300°C und besonders vorzugsweise 180°C zum Eingang der Reaktorkammer hin abnimmt. Insbesondere kann hierbei die Temperatur gleichmäßig in der Zone abnehmen. Ebenso kann die Temperatur mit niedrigeren Temperaturen stärker abnehmen. Bei dem chromenthaltenden Material in beiden Temperaturzonen kann es sich insbesondere um das gleiche chromenthaltende Material handeln. Dieses ist insbesondere als eine einzige einteilige Komponente der Reaktorkammer ausgebildet. Bevorzugt weist die Zone, in der die Temperatur bis zu 1100°C zunimmt, wesentlich kleinere Dimensionen auf als die Zone mit dem Temperaturen oberhalb von 1100°C. Insbesondere können die Abmessungen beider Zonen so gewählt sein, dass die zu pyrolysierenden Substanzen wesentlich kürzer in der Zone der Reaktorkammer verweilen, in der die Temperatur bis 1100°C zunimmt, als in der Zone mit Temperaturen oberhalb von 1100°C. Insbesondere kann die Verweilzeit in die Zone der Reaktorkammer, in der die Temperatur bis 1100°C zunimmt, nur 10 % bis 30 % der Verweilzeit in der Zone mit Temperaturen oberhalb von 1100°C betragen.

In einer beispielhaften Verwendung eines Reaktors ist zwischen dem chromenthaltendem Material der Reaktorrohres, das sich während der Pyrolyse in der Zone mit dem Temperaturen oberhalb von 1100°C befindet, und dem Eingang der Reaktorrohres weiteres chromenthaltendes Material der Reaktorrohres angeordnet, das in einer Temperaturzone angeordnet ist, die an die Zone mit dem Temperaturen oberhalb von 1100°C angrenzt und in der die Temperatur bis zu einer Temperatur von 500°C, vorzugsweise 300°C und besonders vorzugsweise 180°C zum Eingang des Reaktorrohres hin abnimmt. Insbesondere kann hierbei die Temperatur gleichmäßig in der Zone abnehmen. Ebenso kann die Temperatur mit niedrigeren Temperaturen stärker abnehmen. Bei dem chromenthaltenden Material in beiden Temperaturzonen kann es sich insbesondere um das gleiche chromenthaltende Material handeln. Dieses ist insbesondere als eine einzige einteilige Komponente des Reaktorrohres ausgebildet. Bevorzugt ist die Zone, in der die Temperatur bis 1100°C zunimmt, in Längsrichtung des Reaktorrohres deutlich kürzer als die Zone mit den Temperaturen oberhalb von 1100°C. Die Zone, in der die Temperatur bis 1100°C zunimmt, kann in Längsrichtung des Reaktorrohres eine Länge aufweisen, die zwischen 5 % und 30 % der Länge entspricht, die die Zone mit den Temperaturen oberhalb von 1100°C in Längsrichtung des Reaktorrohres aufweist. Insbesondere kann die Zone, in der die Temperatur bis 1100°C zunimmt, in Längsrichtung des Reaktorrohres eine Länge aufweisen, die zwischen 10 % und 20 % der Länge entspricht, die die Zone mit den Temperaturen oberhalb von 1100°C in Längsrichtung des Reaktorrohres aufweist.

In einer beispielhaften Verwendung eines Reaktors ist das chromenthaltende Material des Reaktorrohres mindestens auf der Länge der Zone mit Temperaturen über 1100°C im Reaktorrohr angeordnet.

In einer beispielhaften Verwendung eines Reaktors ist das chromenthaltende Material des Reaktorrohres auf der Länge des Reaktorrohres inklusive zweier Sperrschichten an Eingang und Ausgang des Reaktorrohres angeordnet.

In einer beispielhaften Verwendung eines Reaktors ist das chromenthaltende Material des Reaktorrohres auf der Länge des Reaktorrohres angeordnet.

In einer beispielhaften Verwendung eines Reaktors ist in einem Ausgangsbereich des Reaktors Silberwolle als Halogenfalle dort angeordnet, wo während der Pyrolyse aufgrund der erzeugten Temperaturzone oberhalb von 1100°C eine Temperaturzone zwischen 500°C und 800°C vorhanden ist.

In einer beispielhaften Verwendung eines Reaktors befindet sich der Reaktor in einer Apparatur zur Hochtemperaturumwandlung (in HTC-Systemen).

In einer beispielhaften Verwendung eines Reaktors befindet sich der Reaktor in einer Apparatur zur Elementaranalyse. In einem Beispiel findet hierbei in der Apparatur eine Hochtemperaturumwandlung statt.

In einer beispielhaften Verwendung eines Reaktors werden vor Eintritt in den Reaktor die festen, flüssigen oder festen Substanzen, aus denen der molekulare Wasserstoff gewonnen wird, mittels Gaschromatografie in ihre Bestandteile aufgetrennt.

In einer beispielhaften Verwendung eines Reaktors besteht der Reaktor mindestens teilweise aus für eine Pyrolyse von eingebrachten Substanzen bei Temperaturen ≥ 1100°C geeigneten hitzebeständigen Materialien, welche keinen molekularen Wasserstoff von innen und keine Luft von außen durchlassen. In einem Beispiel weisen diese hitzebeständigen Materialien kein Silizium oder Si-Verbindungen auf. Dies ist insbesondere vorteilhaft, wenn aus halogenhaltigen Substanzen molekularer Wasserstoff gewonnen werden soll.

In einer beispielhaften Verwendung eines Reaktors weist der Reaktor ein äußeres Reaktorrohr und ein inneres Reaktorrohr mit chromenthaltendem Material auf. Das äußere Reaktorrohr besteht mindestens teilweise aus einem oder mehreren hitzebeständigen Materialien. Das innere Reaktorrohr besteht mindestens teilweise aus für eine Pyrolyse von eingebrachten Substanzen bei Temperaturen ≥ 1100°C geeigneten hitzebeständigen Materialien, ist wasserstoffundurchlässig, enthält keinen Wasserstoff, reagiert nicht mit Wasserstoff und ist so innerhalb des äußeren Reaktorrohres zentriert, dass es nicht mit dem äußeren Rohr Kontakt hat.

In einer beispielhaften Verwendung eines Reaktors sind die Abmessungen des chromenthaltende Material des Reaktors im Verhältnis zu den weiteren Abmessungen des Reaktors so dimensioniert, dass die Gewinnung an molekularem Wasserstoff während der Pyrolyse der Substanzen in der Zone mit Temperaturen oberhalb 1100°C abgeschlossen ist. Erfolgt z. B. die Pyrolyse unter Einsatz eines Trägergases in einem Reaktorrohr, so ist das chromenthaltende Material so im Reaktorrohr anzuordnen, dass die Gewinnung an molekularem Wasserstoff abgeschlossen ist, wenn das Trägergas mit dem Pyrolyseprodukten aus die Zone mit Temperaturen oberhalb 1100°C verlässt. Insbesondere ist hierbei die Länge des chromenthaltenden Materials in Längsrichtung des Reaktorrohres so zu wählen, dass während der Pyrolyse eine vollständige Gewinnung des Wasserstoffs aus den zu untersuchenden Substanzen überhaupt möglich ist, also beim Vorbeiströmen des die Substanz enthaltenden Trägergases am chromenthaltenden Material genügend Zeit vorhanden ist, dass der in der Substanz enthaltene Wasserstoff sich in molekularen Wasserstoff umwandeln kann.

Weiter wird ein Verfahren zur quantitativen Gewinnung von molekularem Wasserstoff aus wasserstoffhaltigen festen, flüssigen und gasförmigen Substanzen, die Heteroatome beschrieben.

Das Verfahren verwendet Pyrolysereaktoren mit chromenthaltendem Material. Das Verfahren ist dadurch gekennzeichnet, dass zur Pyrolyse der zu analysierenden Substanzen eine Zone im Pyrolysereaktor mit Temperaturen oberhalb von 1100°C erzeugt wird, in der eine reaktive Chromschicht des chromenthaltenden Materials des Pyrolysereaktors zumindest teilweise angeordnet ist.

In einem beispielhaften Verfahren wird die Zone mit Temperaturen oberhalb von 1100°C nur in einem Teilvolumen des Pyrolysereaktors erzeugt, dass maximal 50 % des Reaktorvolumens ausmacht.

In einem beispielhaften Verfahren wird die Zone mit Temperaturen oberhalb von 1100°C in einem Teilvolumen des Pyrolysereaktors erzeugt, dass minimal 70 % des Reaktorvolumens ausmacht.

In einem beispielhaften Verfahren wird die Zone mit Temperaturen oberhalb von 1100°C in Richtung der Längsachse des Reaktorrohres über minimal 90 % der Länge des Reaktorrohres erzeugt. Hierbei ist bevorzugt das chromenthaltende Material des Reaktorrohres mindestens auf der Länge der Zone mit Temperaturen über 1100°C im Reaktorrohr angeordnet.

In einem beispielhaften Verfahren verwendet das Verfahren hitzebeständige Pyrolysereaktoren.

In einem beispielhaften Verfahren erfolgt die Pyrolyse unter Einsatz eines Trägergases, vorzugsweise Helium.

In einem beispielhaften Verfahren ist in dem Pyrolysereaktor eine chromenthaltende Packung angeordnet, wobei sich die reaktive Chromschicht in der chromenthaltenden Packung zumindest teilweise in der Zone mit Temperaturen oberhalb von 1100°C im Reaktorrohr angeordnet befindet.

In einem anderen beispielhaften Verfahren ist die chromenthaltende Packung vollständig in der Zone mit Temperaturen oberhalb von 1100°C im Reaktorrohr angeordnet.

Während der Pyrolyse wird in der Zone mit Temperaturen oberhalb von 1100 °C die Temperatur bevorzugt zwischen 1100 bis 1800°C gehalten. Ein Trägergas kann mit den zu analysierenden Substanzen in den Reaktor einströmen. Dabei reagiert Chrom mit den Heteroatomen der zu analysierenden Substanzen oder sie enthaltenden Mischungen. Am Reaktorausgang strömt das Trägergas mit dem gebildeten molekularen Wasserstoffgas zu nahe 100 % wieder aus.

Zu den Heteroatomen zählen bekanntermaßen Phosphor-, Stickstoff-, Sauerstoff-, SchwefelAtome sowie Halogene, wie Fluor, Chlor, Brom, lod. Insbesondere ist es eine allgemeine Bezeichnung für Atome in einer organischen Verbindung, bei denen es sich nicht um Kohlenstoff oder Wasserstoff handelt. Praktisch verfügen also alle organischen Verbindungen mit Ausnahme der Kohlenwasserstoffe über Heteroatome.

Die Zone mit Temperaturen oberhalb von 1100°C wird bevorzugt im Reaktor so erzeugt, dass sie sich ungefähr in der Mitte des Reaktors befindet. Zur bevorzugten Ausführung des Verfahrens ist bei einem Reaktorrohr als Reaktor das chromenthaltende Material des Reaktors, bevorzugt in der Form einer chromenthaltenden Packung, auf ungefähr der Hälfte der Zone mit Temperaturen oberhalb von 1100°C im Reaktorrohr bis zum Ausgang des Reaktorrohres, an welchem ein Trägergas mit gebildetem molekularen Wasserstoff ausströmen kann, als horizontale Schicht ausgebildet angeordnet. Bevorzugt erstreckt sich das chromenthaltende Material des Reaktorrohres über die 30 % bis 70 % der Länge der Zone mit Temperaturen über 1100°C in Längsrichtung des Reaktorrohres, die zum Ausgang des Reaktorrohres angeordnet ist. Besonders bevorzugt erstreckt sich das chromenthaltende Material des Reaktorrohres über die 40 % bis 60 % der Länge der Zone mit Temperaturen über 1100°C in Längsrichtung des Reaktorrohres, die zum Ausgang des Reaktorrohres angeordnet ist. Ganz besonders bevorzugt erstreckt sich das chromenthaltende Material des Reaktorrohres über die 45 % bis 55 % der Länge der Zone mit Temperaturen über 1100°C in Längsrichtung des Reaktorrohres, die zum Ausgang des Reaktorrohres angeordnet ist.

In einem weiteren beispielhaften Verfahren ist zwischen dem chromenthaltendem Material der Reaktorrohres, das sich während der Pyrolyse in der Zone mit dem Temperaturen oberhalb von 1100°C befindet, und dem Ausgang der Reaktorrohres weiteres chromenthaltendes Material der Reaktorrohres in einer Zone angeordnet, die an die Zone mit dem Temperaturen oberhalb von 1100°C angrenzt, und in dieser Zone nimmt während der Pyrolyse die Temperatur bis zu einer Temperatur von 500°C, vorzugsweise 300°C und besonders vorzugsweise 180°C zum Ausgang des Reaktorrohres hin ab. Insbesondere kann hierbei die Temperatur gleichmäßig in der Zone abnehmen. Ebenso kann die Temperatur mit niedrigeren Temperaturen stärker abnehmen. Bei dem chromenthaltenden Material in beiden Temperaturzonen kann es sich insbesondere um das gleiche chromenthaltende Material handeln. Dieses ist insbesondere als eine einzige einteilige Komponente des Reaktorrohres ausgebildet. Bevorzugt ist die Zone, in der die Temperatur von 1100°C weiter abnimmt, in Längsrichtung des Reaktorrohres kürzer als die Zone mit dem Temperaturen oberhalb von 1100°C. Die Zone, in der die Temperatur von 1100°C weiter abnimmt, kann in Längsrichtung des Reaktorrohres eine Länge aufweisen, die zwischen 40 % und 100 % der Länge entspricht, die die Zone mit dem Temperaturen oberhalb von 1100°C in Längsrichtung des Reaktorrohres aufweist. Insbesondere kann die Zone, in der die Temperatur von 1100°C weiter abnimmt, in Längsrichtung des Reaktorrohres eine Länge aufweisen, die zwischen 50 % und 85 % der Länge entspricht, die die Zone mit dem Temperaturen oberhalb von 1100°C in Längsrichtung des Reaktorrohres aufweist. Bevorzugt kann die Zone, in der die Temperatur von 1100°C weiter abnimmt, in Längsrichtung des Reaktorrohres eine Länge aufweisen, die zwischen 60 % und 75 % der Länge entspricht, die die Zone mit dem Temperaturen oberhalb von 1100°C in Längsrichtung des Reaktorrohres aufweist.

In einem weiteren beispielhaften Verfahren ist zwischen dem chromenthaltendem Material der Reaktorrohres, das sich während der Pyrolyse in der Zone mit dem Temperaturen oberhalb von 1100°C befindet, und dem Eingang der Reaktorrohres weiteres chromenthaltendes Material der Reaktorrohres angeordnet, wobei während der Pyrolyse in einer Zone, die an die Zone mit dem Temperaturen oberhalb von 1100°C angrenzt, die Temperatur bis zu einer Temperatur von 500°C, vorzugsweise 300°C und besonders vorzugsweise 180°C zum Eingang des Reaktorrohres hin abnimmt. Insbesondere kann hierbei die Temperatur gleichmäßig in der Zone abnehmen. Ebenso kann die Temperatur mit niedrigeren Temperaturen stärker abnehmen. Bei dem chromenthaltenden Material in beiden Temperaturzonen kann es sich insbesondere um das gleiche chromenthaltende Material handeln. Dieses ist insbesondere als eine einzige einteilige Komponente des Reaktorrohres ausgebildet. Bevorzugt ist die Zone, in der die Temperatur bis 1100°C zunimmt, in Längsrichtung des Reaktorrohres deutlich kürzer als die Zone mit dem Temperaturen oberhalb von 1100°C. Die Zone, in der die Temperatur bis 1100°C zunimmt, kann in Längsrichtung des Reaktorrohres eine Länge aufweisen , die zwischen 5 % und 30 % der Länge entspricht, die die Zone mit dem Temperaturen oberhalb von 1100°C in Längsrichtung des Reaktorrohres aufweist. Insbesondere kann die Zone, in der die Temperatur bis 1100°C zunimmt, in Längsrichtung des Reaktorrohres eine Länge aufweisen, die zwischen 10 % und 20 % der Länge entspricht, die die Zone mit dem Temperaturen oberhalb von 1100°C in Längsrichtung des Reaktorrohres aufweist.

Das chromenthaltene Material des Reaktors kann, insbesondere wenn es sich bei dem Reaktor um eine Reaktorkammer oder sogar ein Reaktorrohr handelt, als vertikale oder horizontale Schicht ausgebildet sein. Wenn die Längsachse vertikal ausgerichtet ist, liegt das chromenthaltende Material des Reaktorrohres bevorzugt als horizontale Schicht ausgebildet vor. Dies ist besonders vorteilhaft, wenn die zu analysierenden Substanzen durch das Schmelzen von sie aufnehmenden Silber- oder Zinnkapseln in das Reaktorrohr fallen und dann bei ihrem Fall auf die horizontale Schicht des chromenthaltenden Materials treffen.

Bei einem beispielhaften Verfahren ist bei einem Reaktor, der ein Reaktorrohr mit chromenthaltendem Material aufweist, das chromenthaltende Material des Reaktorrohres auf der gesamten Länge des Reaktorrohres in Richtung seiner Längsachse angeordnet. Insbesondere kann es sich bei dem chromenthaltenden Material des Reaktorrohres um eine chromenthaltende Packung handeln.

Bei einem weiteren beispielhaften Verfahren und der Verwendung des Reaktors ist das chromenthaltende Material des Reaktorrohres mindestens auf der Länge der Zone mit Temperaturen über 1100°C in Längsrichtung des Reaktorrohres im Reaktorrohr angeordnet.

Die chromenthaltende Packung kann eine reine Chromschicht aus Chrompulver und/oder Chromgranulat enthalten. Alternativ wird als chromenthaltendes Material eine Mischung aus einer Chromschicht und anderen temperaturstabilen Materialien verwendet, die keinen Wasserstoff enthalten und/oder nicht mit molekularem Wasserstoff bei Temperaturen ≥ 1100°C reagieren. Bei dem chromenthaltenden Material kann es sich aber auch um eine chromenthaltende Packung handeln, die als eine Mischung aus Chrom und anderen temperaturstabilen Materialien abschnittsweise im Reaktor gepackt vorliegt. In der Zone mit Temperaturen von 1100°C bis 1800°C kann ausschließlich die Chromschicht aus Chrompulver und/oder Chromgranulat zumindest teilweise vorliegen. Insbesondere kann in der Zone mit Temperaturen von 1100°C bis 1800°C ausschließlich die Chromschicht aus Chrompulver und/oder Chromgranulat vorliegen.

Vorteilhafterweise befindet sich bei einem Reaktor mit Reaktorrohr im Reaktorrohr eine Sperrschicht als (kalter) Reaktorabschluss am Reaktorausgang, die vorzugsweise aus Quarzwolle besteht, und die die Funktion hat, die Position des chromenthaltenden Materials des Reaktorrohrs, bevorzugt als Reaktorpackung ausgeführt, zu fixieren und gegen Verrutschen zu sichern.

Vorzugsweise besteht eine reine Chromschicht in der Zone mit Temperaturen über 1100°C aus Chrom-Pulver/Granulat von 0,05 mm bis 10,0 mm Durchmesser, besonders bevorzugt aus Chrom-Pulver/Granulat von 0,1 mm bis 5,0 mm Durchmesser und ganz besonders bevorzugt aus Chrom-Pulver/Granulat von 0,3 mm bis 3,0 mm Durchmesser. Unter reinem Chrom wird hierbei verstanden, dass das Chrom nur soweit noch andere Elemente aufweist, wie sie nach einem Herstellungsprozess, bei dem nur Chrom hergestellt werden soll, noch vorhanden sind.

Diese Zusammensetzung kann einen Trägergas-Fluss von 0,1 ml/min bis 1000 ml/min durch die reine Chromschicht ermöglichen, die u. a. auch Bestandteil einer chromenthaltenden Packung sein kann. Bevorzugt wird die Zusammensetzung so gewählt, dass ein Trägergas-Fluss von 0,2 ml/min bis 500 ml/min möglich ist. Besonders bevorzugt wird die Zusammensetzung so gewählt, dass ein Trägergas-Fluss von 0,4 ml/min bis 300 ml/min möglich ist. Insbesondere wird die Zusammensetzung so gewählt, dass ein Trägergas-Fluss von 10 ml/min bis 250 ml/min möglich ist.

Wenn vor Eintritt in den Reaktor die festen, flüssigen oder gasförmigen Substanzen, aus denen der molekulare Wasserstoff gewonnen wird, mittels Gaschromatografie in ihre Bestandteile aufgetrennt werden, wird die Zusammensetzung der reinen Chromschicht auch bevorzugt so gewählt, dass ein Trägergas-Fluss von 0,2 ml/min bis 10 ml/min möglich ist. Besonders bevorzugt wird in diesem Fall die Zusammensetzung der reinen Chromschicht so gewählt, dass ein Trägergas-Fluss von 0,4 ml/min bis 5 ml/min möglich ist. Ganz besonders bevorzugt wird in diesem Fall die Zusammensetzung der reinen Chromschicht so gewählt, dass ein Trägergas-Fluss von 1 ml/min bis 3 ml/min möglich ist..

Neben Chrom weist das chromenthaltende Material des Reaktors und insbesondere eine chromenthaltende Packung des Reaktors bevorzugt weitere temperaturstabile Materialien auf. Dazu gehören Quarzsplit, Glassy Carbon split, Keramiksplit und/oder andere hitzebeständige nicht mit Wasserstoff reagierende Materialien sowie Quarzwolle, die sich z. B. unterhalb der Chromschicht im Ausgangsbereich des Reaktorrohres absatzweise gepackt befinden und/oder in der chromenthaltenden Schicht enthalten sind. Diese Materialien dienen vor allem zur Verringerung des Totvolumens und der Positionierung des chromenthaltenden Materials in der heißen Zone mit Temperaturen über 1100°C.

Dabei ist vorteilhafterweise die reaktive Chromschicht so angeordnet, dass sie sich teilweise oder vollständig in der heißen Zone mit Temperaturen über 1100°C befindet. Die Temperaturen im Reaktor unterhalb der heißen Zone mit Temperaturen über 1100°C bis zum Reaktorausgang nehmen bekanntermaßen ab. Vorzugsweise sind die Schichten stufenweise gepackt. An einer chromenthaltenden Schicht schließt sich bevorzugt eine Packung aus Quarzwolle an, gefolgt von einer Schicht aus Split und/oder Chips (Quarz, Keramik und/oder Glassy Carbon). Die Temperaturen der Trennschicht und der Chips werden limitiert durch den Schmelzpunkt der Materialien. Bei Quarz liegt dieser bei ca. 1700°C. Den Abschluss bildet wie bereits ausgeführt eine Sperrschicht, bevorzugt aus Quarzwolle.

Vorteilhafterweise befindet sich in einer Reaktorkammer wie vorzugsweise einem Reaktorrohr eine Sperrschicht an beiden Enden des chromenthaltenden Materials wie einer chromenthaltenden Packung, vorzugsweise aus Quarzwolle, die insbesondere die Funktion hat die Position der chromenthaltenden Materials bzw. der chromenthaltenden Packung zu fixieren und gegen Verrutschen zu sichern. Für den Einsatz von Quarz muss eine Temperatur unterhalb des Schmelzpunktes an der entsprechenden Position gewährleistet sein.

In einer Variante kann für das beispielhafte Verfahren als zusätzliche Schicht im Ausgangsbereich des Reaktors, in der Temperaturzone zwischen 500°C und 800°C, weiterhin Silberwolle in die Packung integriert sein, die als zusätzliche Halogen-Falle (für F, Cl, Br, I) fungiert.

Auch wird ein Pyrolysereaktor zur Durchführung des Verfahrens zur quantitativen Gewinnung von molekularem Wasserstoff aus wasserstoffhaltigen festen, flüssigen und gasförmigen Substanzen, die Heteroatome Z aufweisen, beschrieben. Der Pyrolysereaktor weist reines Chrom als Material auf, das aus Chrompulver oder Chromgranulat mit einem Durchmesser von 0,05 mm bis 5,0 mm besteht.

Der Pyrolysereaktor weist reines Chrom als Material auf, das einen Trägergasfluss von bis zu 10 ml/min gewährleistet.

Der Pyrolysereaktor weist reines Chrom als Material auf, das einen Trägergasfluss von bis zu 300 ml/min gewährleistet.

Der Pyrolysereaktor weist reines Chrom als Material auf, das einen Trägergasfluss von bis zu 1000 ml/min gewährleistet.

Der Pyrolysereaktor weist chromenthaltendes Material auf, das aus Chrom und anderen temperaturstabilen Materialien besteht, die keinen Wasserstoff enthalten und/oder nicht mit molekularem Wasserstoff oberhalb von 1100°C reagieren. In einer Ausführungsform weisen diese temperaturbeständigen Materialien kein Silizium oder Si-Verbindungen auf. Dies ist insbesondere vorteilhaft, wenn aus halogenhaltigen Substanzen molekularer Wasserstoff gewonnen werden soll.

Der Pyrolysereaktor weist eine chromenthaltende Packung auf, die aus Chrom und anderen temperaturstabilen Materialien besteht, die abschnittsweise im Reaktor gepackt vorliegen, wobei die anderen temperaturstabilen Materialien keinen Wasserstoff enthalten und/oder nicht mit molekularem Wasserstoff oberhalb von 1100°C reagieren.

Bei beispielhaften Pyrolysereaktoren besteht der Reaktor mindestens teilweise aus für eine Pyrolyse von eingebrachten Substanzen bei Temperaturen ≥ 1100°C geeigneten hitzebeständigen Materialien, welche keinen molekularen Wasserstoff von innen und keine Luft von außen durchlassen. In einer Ausführungsform weisen diese hitzebeständigen Materialien jedoch kein Silizium oder Si-Verbindungen auf. Dies ist insbesondere vorteilhaft, wenn aus halogenhaltigen Substanzen molekularer Wasserstoff gewonnen werden soll.

Bei weiteren beispielhaften Pyrolysereaktoren weist der Pyrolysereaktor ein äußeres Reaktorrohr und ein inneres Reaktorrohr mit chromenthaltendem Material auf, wobei das äußere Reaktorrohr mindestens teilweise aus einem hitzebeständigen Materialien besteht und das innere Reaktorrohr mindestens teilweise aus für eine Pyrolyse von eingebrachten Substanzen bei Temperaturen ≥ 1100°C geeigneten hitzebeständigen Materialien besteht, wasserstoffundurchlässig ist, keinen Wasserstoff enthält, nicht mit Wasserstoff reagiert und so innerhalb des äußeren Reaktorrohres zentriert ist, dass es nicht mit dem äußeren Rohr Kontakt hat.

Der Reaktor kann für Apparaturen zur Elementaranalyse wie Elementaranalysatoren und/oder oder Apparaturen zur Hochtemperaturumwandlung (in HTC-Systemen), die mit ihrer Heizung Temperaturen von mindestens 1100°C bis 1800°C, bevorzugt Temperaturen zwischen 1200°C und 1500°C, erreichen, geeignet sein. Insbesondere kann der Reaktor in Apparaturen zur Elementaranalyse verwendet werden, in denen eine Hochtemperaturumwandlung der zu untersuchenden Substanzen stattfindet. Insbesondere kann der Reaktor in Systemen eingesetzt werden, die weiter eine Gaschromatografieeinheit und/oder ein IRMS aufweisen.

Ein im beispielhaften Verfahren einsetzbarer Reaktor weist chromenthaltendes Material mit einer reaktiven Chromschicht des chromenthaltenden Materials im Inneren auf, wobei der Reaktor aus für eine Pyrolyse von eingebrachten Substanzen bei Temperaturen ≥ 1100°C geeigneten hitzebeständigen Materialien, vorzugsweise aus Quarz, Keramik, Al₂O₃, SiC, besteht, welches keinen molekularen Wasserstoff von innen und keine Luft (N₂, O₂, Ar) von außen durchlassen. Er kann mit einer chromenthaltenden Füllung bestückt sein, die z. B. eine chromenthaltende Packung darstellen kann, und die zur Reaktion mit den HeteroAtomen der zu analysierenden, wasserstoffhaltigen Substanzen oder Mischungen bei Temperaturen ≥ 1100°C geeignet ist.

Der Reaktor kann mindestens ein Reaktorrohr aufweisen, das das chromenthaltende Material des Reaktors aufweist. Das chromenthaltende Material, insbesondere in Form einer chromenthaltenden Füllung oder chromenthaltenden Packung, ist in einer Ausführungsform auf ungefähr der halben Länge im Reaktorrohr bis zum Ausgang des Reaktorrohres, an welchem, vorzugsweise in einem Trägergas, dann der gebildete molekulare Wasserstoff ausströmt, als Schicht, vorzugsweise horizontal oder vertikal ausgerichtet, ausgebildet.

In einem weiteren Beispiel ist das chromenthaltende Material, insbesondere in Form einer chromenthaltenden Füllung oder chromenthaltenden Packung, bevorzugt auf ungefähr der Länge des Reaktorrohres bis zum Ausgang inklusive zweier Sperrschichten (Eingang, Ausgang) zur Fixierung der Chromschicht im Reaktor gefüllt. Je nach verwendetem System kann der Reaktor horizontal oder vertikal angeordnet werden, wobei am Reaktorausgang, bevorzugt in einem Trägergas, der gebildete molekulare Wasserstoff ausströmt.

Vorzugsweise ungefähr mittig in Höhe des Beginns des chromenthaltenden Materials kann im Inneren des Reaktorrohres mit dem chromenthaltenden Material eine heiße Zone mit Temperaturen über 1100°C erzeugt werden. Bevorzugt weist dabei die heiße Zone Temperaturen von mindestens 1100°C bis maximal 1800°C auf.

Besonders bevorzugt kann das beispielhafte Verfahren in einem Reaktor durchgeführt werden, der ein äußeres hitzebeständiges Reaktorrohr und ein inneres hitzebeständiges Reaktorrohr aufweist, wobei das innere Reaktorrohr, welches wasserstoffundurchlässig ist, keinen Wasserstoff enthält und nicht mit Wasserstoff reagiert, so innerhalb des äußeren Reaktorrohres zentriert ist, dass es nicht mit dem äußeren Rohr Kontakt hat, wobei sich das chromenthaltende Material, z. B. in Form einer chromenthaltenden Packung, im inneren Reaktorrohr befindet.

Verwendete Reaktoren beinhalten chromenthaltendes Material, z. B. in Form einer chromenthaltenden Packung, wie oben beschrieben und können insbesondere zur massenspektrometrischen Online-Bestimmung der Wasserstoffisotopenzusammensetzung benutzt werden.

Wie schon ausgeführt sind die anderen temperaturstabilen Materialien in dem chromenthaltendem Material wie einer chromenthaltenden Packung z. B. Quarzsplit, Glassy Carbon split, Keramiksplit und/oder andere hitzebeständige nicht mit Wasserstoff reagierende Materialien sowie gegebenenfalls Silberwolle und Quarzwolle. Diese können nach dem chromenthaltendem Material in einer Reaktorkammer, die vorzugsweise als Reaktorrohr ausgeführt ist, d. h. in einem Bereich, den die Pyrolyseprodukte der pyrolisierten Substanzen erst nach Kontakt mit der für den Pyrolyseprozess der Substanzen zugänglichen reaktiven Chromschicht des chromenthaltenden Materials des Reaktors erreichen, im Ausgangsbereich des Reaktorkammer vorzugsweise absatzweise gepackt angeordnet sein oder in dem chromenthaltenden Material des Reaktors selber.

Bei einem vertikal ausgerichteten Reaktorrohr können dabei die temperaturstabilen Materialien unterhalb des chromenthaltenden Materials im Ausgangsbereich des Reaktorrohres vorzugsweise absatzweise gepackt angeordnet sein.

Bevorzugt ist das Chrom in dem chromenthaltenden Material des Reaktors mindestens im Bereich der heißen Zone mit Temperaturen über 1100°C ein Chrom-Pulver/Granulat von 0,1 mm bis 5,0 mm Durchmesser, so dass ein Trägergas-Fluss von 10 ml/min bis 250 ml/min stabil generiert werden kann.

Das für eine Pyrolyse hitzebeständige Material der Reaktorrohre kann aus KeramikMaterialien sein, bevorzugt Al₂O₃ und SiC, die für Temperaturen bis 1800°C verwendet werden können. Es kann auch aus Glassy Carbon bestehen und dann ebenfalls für Temperaturen bis 1800°C unter Ausschluss von Luft zum Einsatz kommen. Weiterhin sind auch Reaktorrohre aus Metallen oder Quarz einsetzbar.

Besonders bevorzugt werden doppelwandige Reaktorrohre wie in DE 198 16 348 C1 beschrieben, erfindungsgemäß verwendet, wobei bevorzugt das äußere Reaktorrohr aus keramischen Materialien besteht und das innere Reaktorrohr aus Glassy Carbon (Glaskohlenstoff), Quarz oder Keramik, bevorzugt jedoch aus Quarz.

Das hat den großen Vorteil, dass zum Messen von kleinsten Probenmengen der innere Durchmesser der Reaktionszone reduziert werden kann. Auch kann das an sich bekannte Umkehrflusssystem, wie bei Gehre et al. (s. vorn) beschrieben, vorteilhaft angewendet werden.

In einer beispielhaften Form besitzt der Reaktor, insbesondere ein Reaktorrohr des Reaktors, eine bevorzugte Länge von 300 bis 600 mm, insbesondere 300 bis 500 mm, wobei der Außendurchmesser 1/4 Zoll (6,35mm), 1/8 Zoll (3,175mm) oder 1/16 Zoll (1,587mm) betragen kann. Der Innendurchmesser ist so gestaltet, dass ein Fluss eines Trägergases von 0,4 ml/min bis 10,0ml/min ermöglicht, vorzugsweise von 0,5 ml/min bis 3 ml/min ermöglicht wird. Vorzugsweise besitzt der Innendurchmesser Abmessungen von 0,5 mm bis 1 mm (bei 1/16 Zoll) bzw. 0,5 mm bis 2 mm (bei 1/8 Zoll und ¼ Zoll). Besonders bevorzugt wird ein Reaktorrohr der Länge von 320 mm, einen Außendurchmesser von 1/16 Zoll (1,587mm) und einen Innendurchmesser von 0,5 bis 1mm. Der Reaktor, insbesondere ein Reaktorrohr im Reaktor, kann waagerecht oder senkrecht positioniert sein.

Das chromenthaltende Material des Reaktors, wie z. B. eine chromenthaltende Packung, weist eine Länge in Abhängigkeit von der Reaktorlänge auf. Sie ist jedoch bevorzugt mindestens 5 mm lang und besitzt maximal die Länge des gewählten Reaktorsystems. Reaktoren für die Elementaranalyse besitzen im Ofen bekanntermaßen Füllungen mit eine Länge von etwa 220 mm, Reaktoren für Hochtemperaturumwandlung eine Länge von etwa 250 mm. In einer anderen Ausführungsform, die bevorzugt dann genutzt wird, wenn vor Eintritt in den Reaktor die festen, flüssigen oder gasförmigen Substanzen, aus denen der molekulare Wasserstoff gewonnen wird, mittels Gaschromatografie in ihre Bestandteile aufgetrennt werden, weist jedoch das chromenthaltende Material des Reaktor bevorzugt eine Länge von mindestens 150 mm auf und besitzt maximal die Länge des gewählten Reaktorsystems. Insbesondere längere chromenthaltende Packungen sind in Abhängigkeit der Korngröße durchaus einsetzbar, wobei die Packung sich nicht zusetzen darf und der Durchfluss gewährleistet sein muss.

In einer ersten bevorzugten beispielsweisen Ausführung ist die Packung im senkrecht ausgerichteten Reaktor beginnend am Reaktorende wie folgt vorliegend:
Untere Sperrschicht, bevorzugt aus Quarzwolle: 20 mm
Optionale Schicht aus Silberwolle: ca. 10 mm in heiße Zone in Splitschicht integrieren
Chip oder Splitschicht, bevorzugt aus Quarz: ca. 100 bis 110 mm
Glaswolle zur Separation der Chromschicht: ca. 5 bis 10 mm
Chromschicht aus Pulver/Partikeln: ca. 80 bis 85 mm
Optionale Schicht aus Quarzwolle zur Separation der Chromschicht: ca. 3 bis 5 mm.

In einem zweiten bevorzugten Ausführungsbeispiel ist die Packung im Reaktor beginnend am Reaktorende wie folgt vorliegend:
Sperrschicht (Ausgang), bevorzugt aus Quarzwolle: ca. 20 mm
Optionale Schicht aus Silberwolle: ca. 10 mm
Chromschicht aus Pulver/Partikeln: ca. 240 mm
Sperrschicht (Eingang): bevorzugt aus Quarzwolle: ca.20 mm.

Gegenstand der Erfindung ist auch eine Vorrichtung zur quantitativen Gewinnung von molekularem Wasserstoff aus festen, flüssigen oder gasförmigen Substanzen, die Heteroatome aufweisen, durch Pyrolyse, gemäß Anspruch 9.

. Diese beinhaltet einen Reaktor mit chromenthaltendem Material und einen Ofen, in dessen Innerem Temperaturen oberhalb von 1100°C erzeugt werden können. Der Reaktor mit dem chromenthaltenden Material ist so im Inneren des Ofens angeordnet, dass zur Pyrolyse der Substanzen in dem Reaktor eine Zone mit Temperaturen oberhalb von 1100°C erzeugt werden kann, in der sich eine für den Pyrolyseprozess der Substanzen zugängliche reaktive Chromschicht des chromenthaltenden Materials des Reaktors zumindest teilweise angeordnet befindet.

Die erfindungsgemäße Vorrichtung kann insbesondere jede Ausführungsform eines beispielhaft aufgeführten Reaktors beinhalten.

In einer beispielhaften Vorrichtung beinhaltet die Vorrichtung einen Reaktor mit chromenthaltendem Material, der eine Reaktorkammer mit chromenthaltendem Material aufweist, die als Reaktorrohr ausgeführt ist, wobei die Längsachse des Reaktorrohres vertikal ausgerichtet ist und das chromenthaltende Material des Reaktorrohres als horizontale Schicht ausgebildet vorliegt. Bevorzugt erstreckt sich das chromenthaltende Material des Reaktorrohres über die 40 % bis 60 % der Länge der zu erzeugenden Zone mit Temperaturen über 1100°C in Längsrichtung des Reaktorrohres, die zum Ausgang des Reaktorrohres angeordnet ist.

In der erfindungsgemäßen Vorrichtung ist zwischen dem chromenthaltendem Material des Reaktorrohres, das sich während der Pyrolyse in der Zone mit dem Temperaturen oberhalb von 1100°C befindet, und dem Ausgang der Reaktorrohres weiteres chromenthaltendes Material der Reaktorrohres in einer Zone angeordnet, die an die Zone mit dem Temperaturen oberhalb von 1100°C angrenzt, und der Ofen der Vorrichtung wird so betrieben, dass in dieser Zone während der Pyrolyse die Temperatur bis zu einer Temperatur von 500°C, vorzugsweise 300°C und besonders vorzugsweise 180°C zum Ausgang des Reaktorrohres hin abnimmt. Insbesondere kann der Ofen der Vorrichtung hierbei so betrieben werden, dass die Temperatur gleichmäßig in der Zone abnimmt. Ebenso kann der Ofen der Vorrichtung hierbei so betrieben werden, dass die Temperatur mit niedrigeren Temperaturen stärker abnimmt. Bei dem chromenthaltenden Material in beiden Temperaturzonen kann es sich insbesondere um das gleiche chromenthaltende Material handeln. Dieses ist insbesondere als eine einzige einteilige Komponente des Reaktorrohres ausgebildet. Bevorzugt ist die Zone, in der die Temperatur von 1100°C weiter abnimmt, in Längsrichtung des Reaktorrohres kürzer als die Zone mit dem Temperaturen oberhalb von 1100°C. Die Zone, in der die Temperatur von 1100°C weiter abnimmt, kann in Längsrichtung des Reaktorrohres eine Länge aufweisen, die zwischen 40 % und 100 % der Länge entspricht, die die Zone mit dem Temperaturen oberhalb von 1100° C in Längsrichtung des Reaktorrohres aufweist. Insbesondere kann die Zone, in der die Temperatur von 1100°C weiter abnimmt, in Längsrichtung des Reaktorrohres eine Länge aufweisen , die zwischen 50 % und 85 % der Länge entspricht, die die Zone mit dem Temperaturen oberhalb von 1100°C in Längsrichtung des Reaktorrohres aufweist. Bevorzugt kann die Zone, in der die Temperatur von 1100°C weiter abnimmt, in Längsrichtung des Reaktorrohres eine Länge aufweisen, die zwischen 60 % und 75 % der Länge entspricht, die die Zone mit dem Temperaturen oberhalb von 1100°C in Längsrichtung des Reaktorrohres aufweist.

In einer beispielhaften Vorrichtung ist zwischen dem chromenthaltendem Material der Reaktorrohres, das sich während der Pyrolyse in der Zone mit dem Temperaturen oberhalb von 1100°C befindet, und dem Eingang der Reaktorrohres weiteres chromenthaltendes Material der Reaktorrohres angeordnet. Der Ofen der Vorrichtung kann so betrieben werden, dass während der Pyrolyse in einer Zone, die an die Zone mit dem Temperaturen oberhalb von 1100°C angrenzt, die Temperatur bis zu einer Temperatur von 500°C, vorzugsweise 300°C und besonders vorzugsweise 180°C zum Eingang des Reaktorrohres hin abnimmt. Insbesondere kann der Ofen der Vorrichtung kann so betrieben werden, dass die Temperatur gleichmäßig in der Zone abnimmt. Ebenso kann der Ofen der Vorrichtung kann so betrieben werden, dass die Temperatur mit niedrigeren Temperaturen stärker abnimmt. Bei dem chromenthaltenden Material in beiden Temperaturzonen kann es sich insbesondere um das gleiche chromenthaltende Material handeln. Dieses ist insbesondere als eine einzige einteilige Komponente des Reaktorrohres ausgebildet. Bevorzugt ist die Zone, in der die Temperatur bis 1100°C zunimmt, in Längsrichtung des Reaktorrohres deutlich kürzer als die Zone mit dem Temperaturen oberhalb von 1100°C. Die Zone, in der die Temperatur bis 1100°C zunimmt, kann in Längsrichtung des Reaktorrohres eine Länge aufweisen, die zwischen 5 % und 30 % der Länge entspricht, die die Zone mit dem Temperaturen oberhalb von 1100°C in Längsrichtung des Reaktorrohres aufweist. Insbesondere kann die Zone, in der die Temperatur bis 1100°C zunimmt, in Längsrichtung des Reaktorrohres eine Länge aufweisen, die zwischen 10 % und 20 % der Länge entspricht, die die Zone mit dem Temperaturen oberhalb von 1100 ° C in Längsrichtung des Reaktorrohres aufweist. In einer Ausführungsform der erfindungsgemäßen Vorrichtung kann die Zone mit Temperaturen oberhalb von 1100°C in einem Teilvolumen des Reaktors erzeugt werden, dass minimal 70 % des Reaktorvolumens ausmacht.

In einer beispielhaften Vorrichtung beinhaltet die Vorrichtung einen Reaktor mit chromenthaltendem Material, der eine Reaktorkammer mit chromenthaltendem Material aufweist, die als Reaktorrohr ausgeführt ist, wobei das chromenthaltende Material des Reaktorrohres auf der Länge des Reaktorrohres inklusive zweier Sperrschichten an Eingang und Ausgang des Reaktorrohres angeordnet ist.

In einer beispielhaften Vorrichtung beinhaltet die Vorrichtung einen Reaktor mit chromenthaltendem Material, der eine Reaktorkammer mit chromenthaltendem Material aufweist und wobei zwischen dem chromenthaltendem Material der Reaktorkammer und dem Ausgang der Reaktorkammer absatzweise gepackt temperaturstabile Materialien angeordnet sind, die keinen Wasserstoff enthalten und/oder nicht mit molekularem Wasserstoff bei Temperaturen ≥ 1100°C reagieren.

In einer beispielhaften Vorrichtung beinhaltet die Vorrichtung einen Reaktor mit chromenthaltendem Material, in dessen Ausgangsbereich Silberwolle als Halogenfalle dort angeordnet ist, wo während der Pyrolyse aufgrund der zu erzeugenden Temperaturzone oberhalb von 1100°C eine Temperaturzone zwischen 500°C und 800°C vorhanden ist.

Verfahren und Reaktoren werden zur massenspektrometrischen Online-Bestimmung von Wasserstoffisotopenverhältnissen in an sich bekannten Apparaturen bzw. Analysatoren zur Elementaranalyse und/oder zur Hochtemperaturumwandlung (im HTC-System) verwendet. Der durch Pyrolyse der zu analysierenden Substanzen gewonnene molekulare Wasserstoff dient dabei als Messgas und gestattet so eine Bestimmung der δ²H-Werte z. B. mittels eines Isotopenverhältnismassenspektrometers (IRMS). Der Pyrolysereaktor kann in üblicher Art und Weise über eine Gaschromatografiesäule mit dem IRMS verbunden sein. Die Gaschromatografiesäule ist temperiert (vorzugsweise bei ca. 60-100°C). Die zu analysierenden Substanzen sind üblicherweise in Silber- oder Zinnkapseln eingeschlagen und werden von einem Probenaufgeber (Autosampler) gemäß einem eingestellten Zeitprogramm in regelmäßigen Abständen in den Pyrolysereaktor abgegeben. In einer bevorzugten Ausführungsform werden die zu analysierenden Substanzen in einem Grafittiegel, der als Metallfänger wirkt, aufgenommen und von einem Probenaufgeber (Autosampler) gemäß einem eingestellten Zeitprogramm in regelmäßigen Abständen in den Pyrolysereaktor abgegeben. Als Trägergas wird vorzugsweise Helium verwendet.

Verfahren und Reaktoren werden außerdem erfindungsgemäß zur massenspektrometrischen Online-Bestimmung von Wasserstoffisotopenverhältnissen in an sich bekannten Apparaturen bzw. Analysatoren zur Hochtemperaturumwandlung (im HTC-System) verwendet, wobei vor Eintritt in den Reaktor die festen, flüssigen oder gasförmigen Substanzen, aus denen der molekulare Wasserstoff gewonnen wird, mittels Gaschromatografie in ihre Bestandteile aufgetrennt werden. Der durch Pyrolyse der zu analysierenden Substanzen gewonnene molekulare Wasserstoff dient dabei als Messgas und gestattet so eine Bestimmung der δ²H-Werte z. B. mittels eines Isotopenverhältnismassenspektrometers (IRMS). Der Pyrolysereaktor ist in üblicher Art und Weise über eine Transfer-Kapillare und einen Open-Split mit dem IRMS verbunden. Als Trägergas wird vorzugsweise Helium verwendet.

Gegenstand der Erfindung ist deshalb auch einen Massenspektrometer gemäß Anspruch 15, das eine erfindungsgemäße Vorrichtung zur quantitativen Gewinnung von molekularem Wasserstoff aus festen, flüssigen oder gasförmigen Substanzen, die Heteroatome aufweisen, durch Pyrolyse beinhaltet.

In einem beispielhaften Massenspektrometer können vor Eintritt in den Reaktor einer erfindungsgemäßen Vorrichtung zur quantitativen Gewinnung von molekularem Wasserstoff aus festen, flüssigen oder gasförmigen Substanzen, die Heteroatome aufweisen, durch Pyrolyse die festen, flüssigen oder gasförmigen Substanzen, aus denen der molekulare Wasserstoff gewonnen wird, mittels Gaschromatografie in ihre Bestandteile aufgetrennt werden. Hierzu weist das Massenspektrometer bevorzugt eine Gaschromatografieeinheit auf, in der die festen, flüssigen oder gasförmigen Substanzen, aus denen der molekulare Wasserstoff gewonnen werden soll, aufgetrennt werden können.

Die Bestimmung des Wasserstoffisotopenverhältnisses ²H/¹H in einer beliebigen organischen oder anorganischen Probe ist z. B. in der Geologie, Hydrologie, Anthropologie, Ökologie, Lebensmittelchemie oder Medizin von Bedeutung und kann unter Verwendung der erfindungsgemäßen Verwendungen von Reaktoren, Verfahren, Reaktoren, Vorrichtungen und Massenspektrometern effektiv online durchgeführt werden.

Mit den erfindungsgemäßen Verwendungen von Reaktoren, Vorrichtungen und Massenspektrometern, wodurch molekularer Wasserstoff zu 100 % entsteht, kann das Spektrum an zu analysierenden Substanzen wesentlich erweitert werden und es können z. B. auch geologische Mineralien, Keratine, organische Mischungen, Hufe, Nägel und vieles mehr einer genauen Analyse zugeführt werden.

### Ausführungsbeispiele:

Abb. 1: Erste Ausführungsform eines einwandigen Reaktors mit einer chromenthaltenden Packung
Abb. 2: Doppelwandiger Reaktor mit einer chromenthaltenden Packung
Abb. 3: Zweite Ausführungsform eines einwandigen Reaktors mit einer chromenthaltenden Packung
Abb. 4: Nebenproduktmessung mit dem Reaktor gemäß Abbildung 2 im HTC-System
Abb. 5: Detektion der Masse 27 mit dem Reaktor gemäß Abbildung 2 im HTC-System
Abb. 6: Nebenproduktmessung mit dem Reaktor gemäß Abbildung 2 im Cr-EA-System
Abb. 7: Detektion der Masse 27 mit dem Reaktor gemäß Abbildung 2 im Cr-EA-System
Abb. 8: Nebenproduktmessung mit dem Reaktor gemäß Abbildung 3 im GC/HTC-System
Abb. 9: Detektion der Masse 27 mit dem Reaktor gemäß Abbildung 3 im GC/HTC-System
Abb. 10: Nebenproduktmessung mit dem Reaktor gemäß Abbildung 3 im GC-Cr-System
Abb. 11: Detektion der Masse 27 mit dem Reaktor gemäß Abbildung 3 im GC-Cr-System
Abb. 12: Nebenproduktmessung mit dem Reaktor gemäß Abbildung 3 im GC/HTC-System
Abb. 13: Detektion der Masse 35 bis 38 mit dem Reaktor gemäß Abbildung 3 im GC/HTC-System
Abb. 14: Nebenproduktmessung mit dem Reaktor gemäß Abbildung 3 im GC-Cr-System
Abb. 15: Detektion der Masse 35 bis 38 mit dem Reaktor gemäß Abbildung 3 im GC-Cr-System

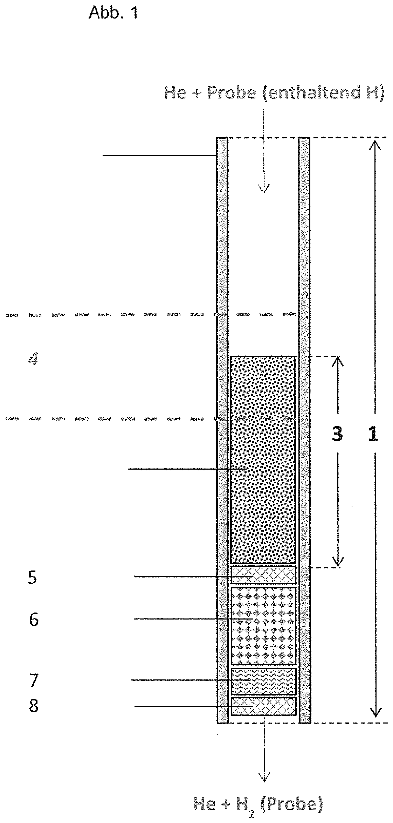

Bei den Abbildungen verweisen gleiche Bezugszeichen auf gleiche Merkmale der Erfindung. Die Darstellungen in den Abbildungen 1 bis 3 zeigen ein bestimmtes Verhältnis der Dimensionen der einzelnen Komponenten des Reaktors, um so eine Ausführungsform darzustellen. In den folgenden Legenden werden bewusst zu den Komponenten andere Parameter genannt, um so eine weitere Ausführungsform des in den Abbildungen gezeigten Reaktors anzuführen.

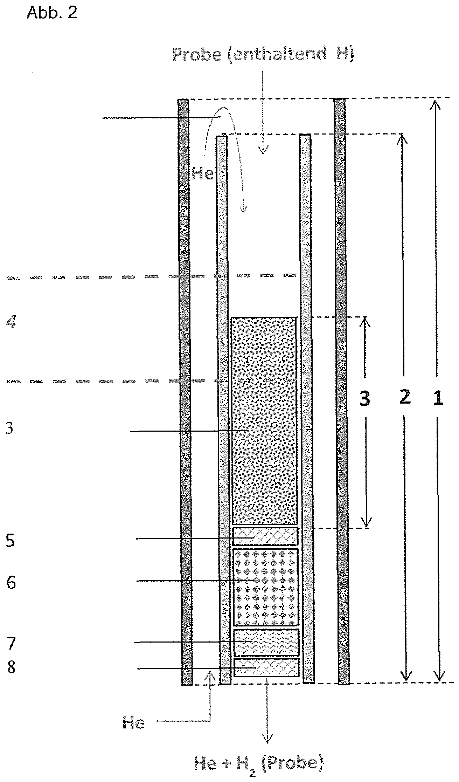

Legende zu den Abbildungen 1 und 2:
- 1: Reaktorrohr (Keramik): Länge: 450 mm
- 2: Inneres Reaktorrohr (Glassy Carbon); Länge der Packung: 220 mm
- 3: Chromfüllung: Chrompulver/Partikel mit Durchmesser 0,1 bis 5 mm, Länge: 80 mm
- 4: Heißeste Zone 1100 bis 1800°C
- 5: Quarzwolle: Länge: 10mm
- 6: Quarzchips: Länge: 100mm
- 7: Silberwolle (optional): Länge: 20mm (in Quarzschicht integriert, deren Gesamtlänge bleibt 100mm)
- 8: Quarzwolle Länge: 20mm

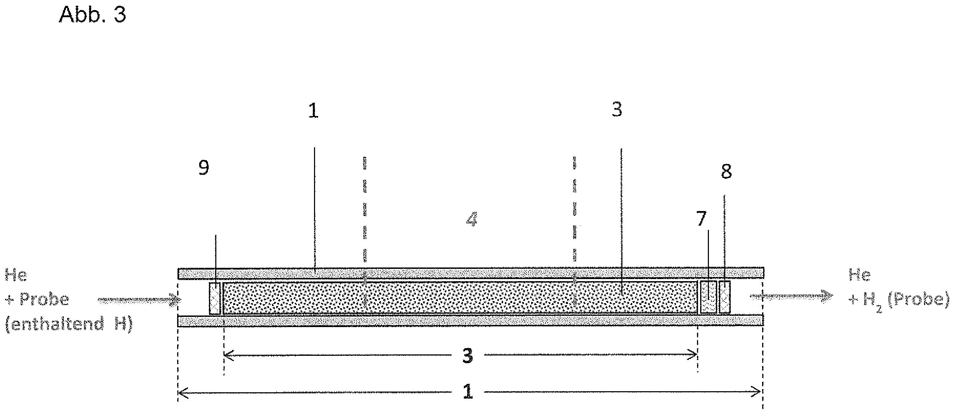

Legende zu Abbildung 3:
1 Reaktorrohr (Keramik); Länge 320 mm, Außendurchmesser 1/16 Zoll, Innendurchmesser 0,8 mm
3 Chromfüllung: Chrompulver/Partikel mit Durchmesser 0,25 mm, Länge: 240 mm
4 Heißeste Zone 1100 bis 1500°C
7 Silberwolle (optional): Länge: 20 mm
8 Länge der Quarzwolle an Ausgang: 20 mm
9 Länge der Quarzwolle an Eingang: 20 mm

### Beispiel 1:

Anwendungsbeispiel anhand von Koffein unter Verwendung eines doppelwandigen Pyrolysereaktors gemäß Abb. 2:
Feste Proben werden in Silberkapseln eingewogen. Die Silberkapseln werden in den Autosampler des Analysators (EA) gelegt. Von dort fallen die Proben einzeln in den Pyrolysereaktor, wo in der heißen Zone die Silberkapsel schmilzt und die Probe zersetzt wird. Die flüchtigen Reaktionsprodukte werden mit dem Trägergas Helium durch eine Gaschromatografiesäule zum Open-Split-Modul transportiert. Von dort gelangt der Trägergasstrom mit dem H₂ in das Isotopenverhältnis-Massenspektrometer, wo die lonenströme der Massen bestimmt und mit denen eines geeichten Referenzgases verglichen werden.

Die Reaktion wird mittels eines Standard- Hochtemperaturumwandlungssystems zur Elementaranalyse (HTC-System; z.B. TC/EA von Thermo Fisher Scientific GmbH, Bremen, DE, ohne Chrom) und einem erfindungsgemäßen Hochtemperaturumwandlungssystem zur Elementaranalyse (Cr-EA-System) durchgeführt.

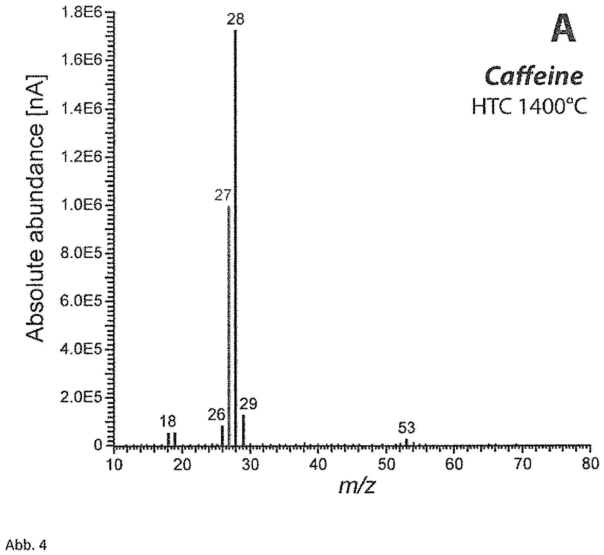

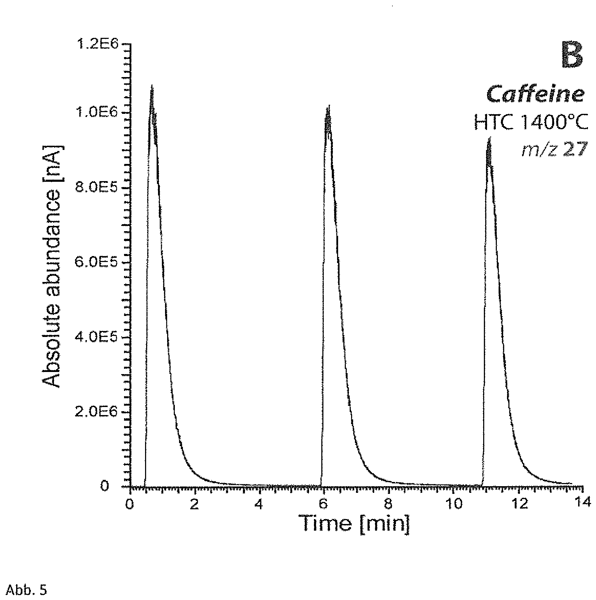

Wie man den anliegenden Abbildungen 4 und 5 entnehmen kann, führt die an sich bekannte HTC-System zur Bildung von Nebenprodukten, die die Ausbeute von molekularem Wasserstoff auf maximal 60-70 % beschränkt.

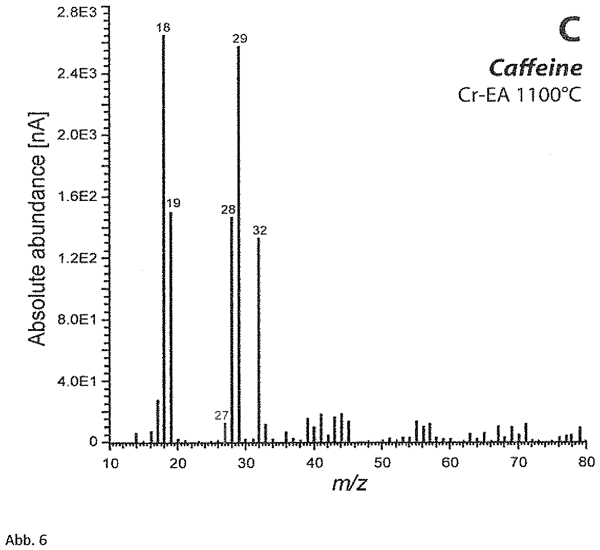

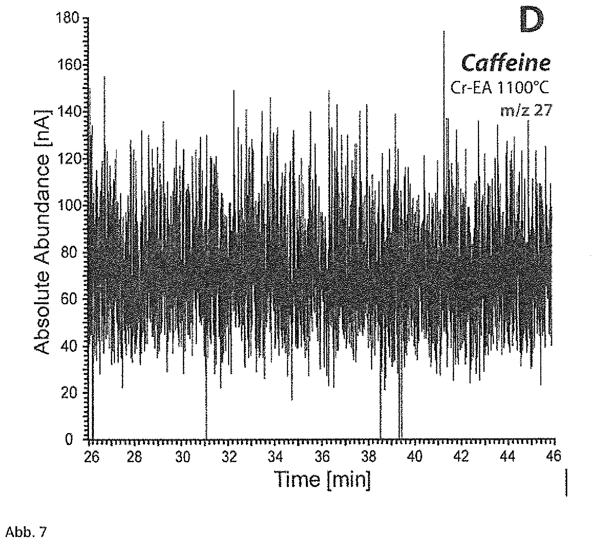

In den Abbildungen 6 und 7 ist gezeigt, dass mit dem erfindungsgemäß verwendeten Reaktor und Verfahren eine nahezu 100%ige Ausbeute erreicht wird.

### Beispiel 2:

Anwendungsbeispiel anhand von Koffein unter Verwendung eines Pyrolysereaktors gemäß Abb. 3

Die flüchtigen Reaktionsprodukte werden mit dem Trägergas Helium durch eine Transfer-Kapillare zum Open-Split-Modul transportiert. Von dort gelangt der Trägergasstrom mit dem H₂ in das Isotopenverhältnis-Massenspektrometer, wo die lonenströme der Massen bestimmt und mit denen eines geeichten Referenzgases verglichen werden.

Die Reaktion wird mittels Standard- Hochtemperaturumwandlungssystems (GC/HTC-System; Standard TC/GC System z. B. von Thermo Fisher Scientific GmbH, Bremen, DE, ohne Chrom) und erfindungsgemäßen Hochtemperaturumwandlungssystem (GC-Cr - System) durchgeführt. Dabei wurde vor Eintritt in den Pyrolysereaktor das Koffein mittels Gaschromatografie in seine Bestandteile aufgetrennt.

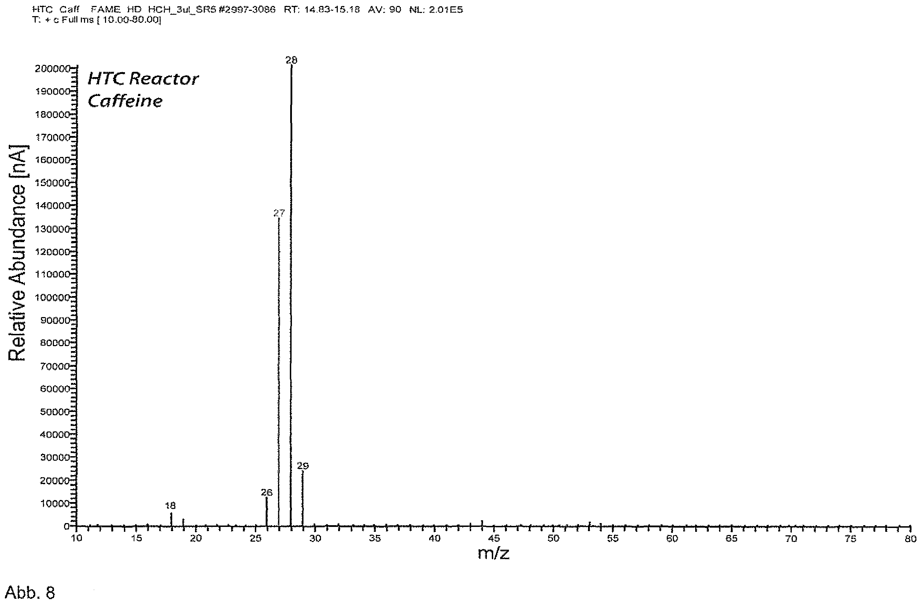

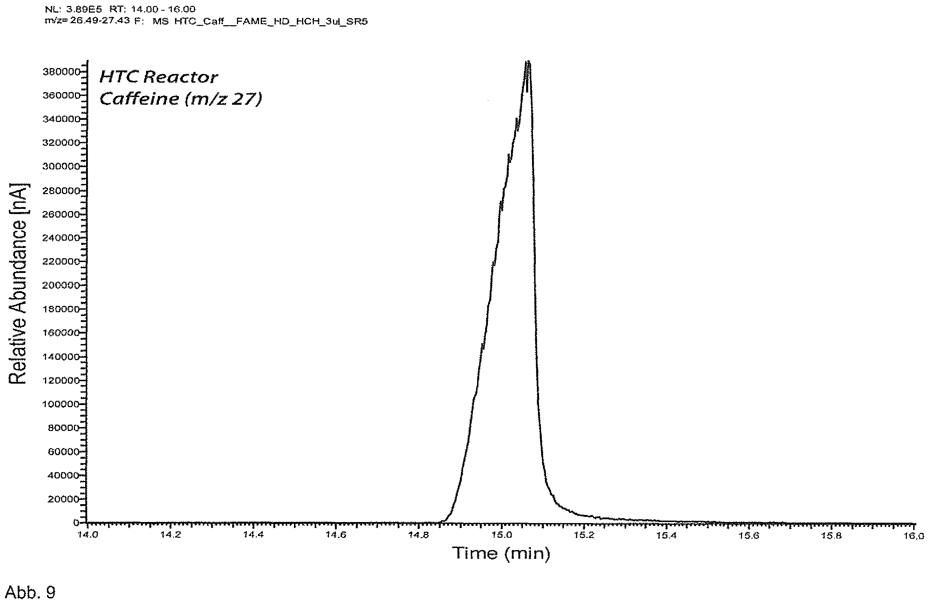

Wie man den anliegenden Abbildungen 8 und 9 entnehmen kann, führt die an sich bekannte GC/HTC-System zur Bildung von Nebenprodukten, die die Ausbeute von molekularem Wasserstoff auf maximal 60-70 % beschränkt.

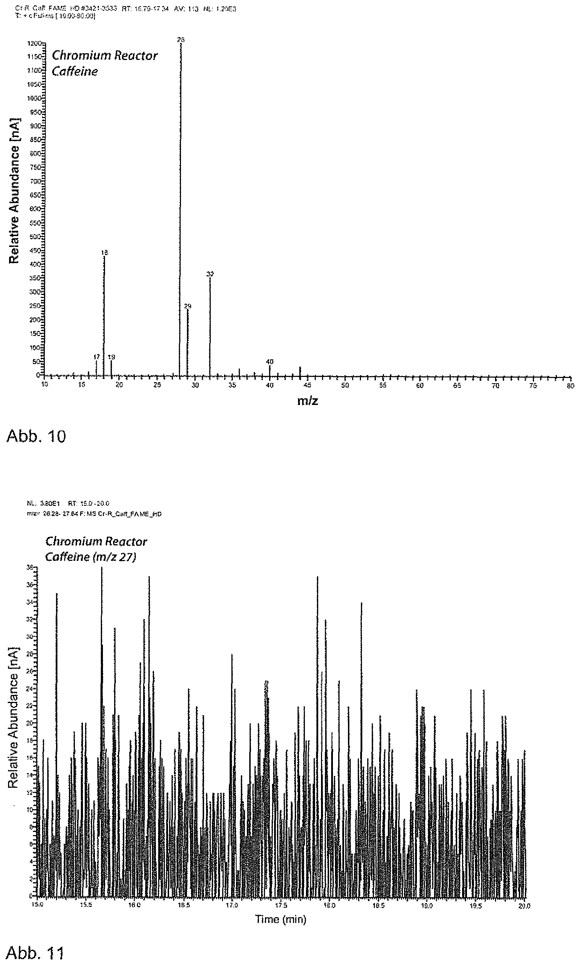

In den Abbildungen 10 und 11 ist gezeigt, dass mit dem erfindungsgemäß verwendeten Reaktor und Verfahren eine nahezu 100%ige Ausbeute erreicht wird.

Im Folgenden werden die Ergebnisse der Messungen zu den Beispielen 1 und 2 weiter erläutert:
Abbildungen 4 und 5 sowie 8 und 9: H-haltige Neben-Produkt Bildung (HCN) bei der Umsetzung des Wasserstoffs im Molekül in molekularen Wasserstoff im HTC-System sowie GC/HTC-System:

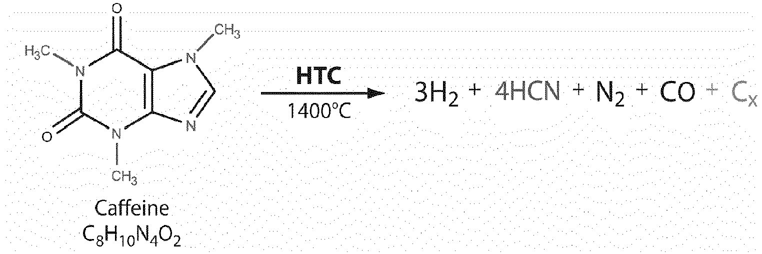

Abbildungen 6 und 7 sowie 10 und 11: keine H-haltige Neben-Produktbildung bei der Umsetzung des Wasserstoffs im Molekül in molekularen Wasserstoff im Cr-EA-System sowie GC-Cr-System:

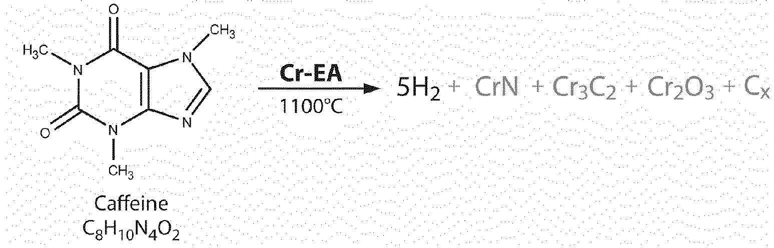

Abbildungen 4 und 5: Nebenproduktmessungen mit HTC-System, Detektion der Masse 27 (HCN) im Bereich von > 1mA, -10000 mal höher als beim Cr-EA-System Abbildungen 6 und 7: Nebenproduktmessungen mit Cr-EA-System, keine Detektion der Masse 27 möglich (HCN), Luft-Wasseruntergrund im Bereich < 0,1 µA.

Abbildungen 8 und 9: Nebenproduktmessungen mit GC/HTC-System, Detektion der Masse 27 (HCN) im Bereich von > 0,4mA, -10000 mal höher als beim GC-Cr-System Abbildungen 10 und 11: Nebenproduktmessungen mit GC-Cr-System, keine Detektion der Masse 27 möglich (HCN), Luft-Wasseruntergrund im Bereich < 0,04 µA.

### Beispiel 3:

Anwendungsbeispiel anhand von Hexachlorcyclohexan unter Verwendung eines Pyrolysereaktors gemäß Abb. 3:
Die flüchtigen Reaktionsprodukte werden mit dem Trägergas Helium durch eine Transfer-Kapillare zum Open-Split-Modul transportiert. Von dort gelangt der Trägergasstrom mit dem H₂ in das Isotopenverhältnis-Massenspektrometer, wo die lonenströme der Massen bestimmt und mit denen eines geeichten Referenzgases verglichen werden.

Die Reaktion wird mittels Standard- Hochtemperaturumwandlungssystems (GC/HTC-System; Standard TC/GC System z. B. von Thermo Fisher Scientific GmbH, Bremen, DE, ohne Chrom) und erfindungsgemäßen Hochtemperaturumwandlungssystem (GC-Cr - System) durchgeführt. Dabei wurde vor Eintritt in den Pyrolysereaktor das Hexachlorcyclohexan mittels Gaschromatografie in seine Bestandteile aufgetrennt.

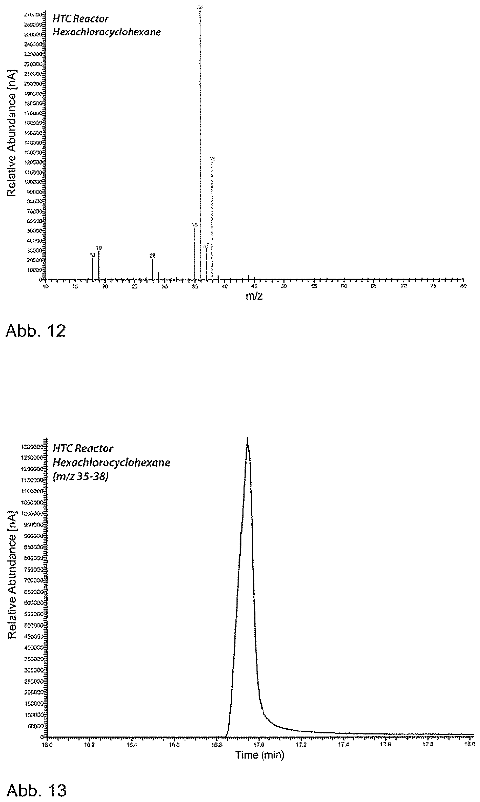

Abbildungen 12 und 13: H-haltige Neben-Produkt Bildung (HCl) bei der Umsetzung des Wasserstoffs im Molekül in molekularen Wasserstoff im GC/HTC-System

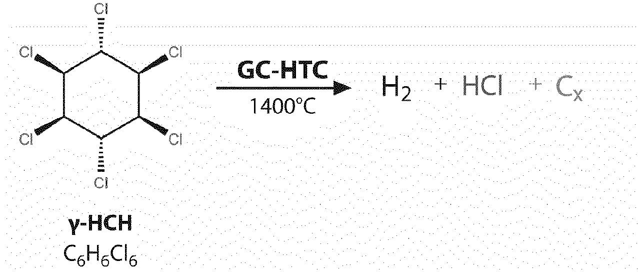

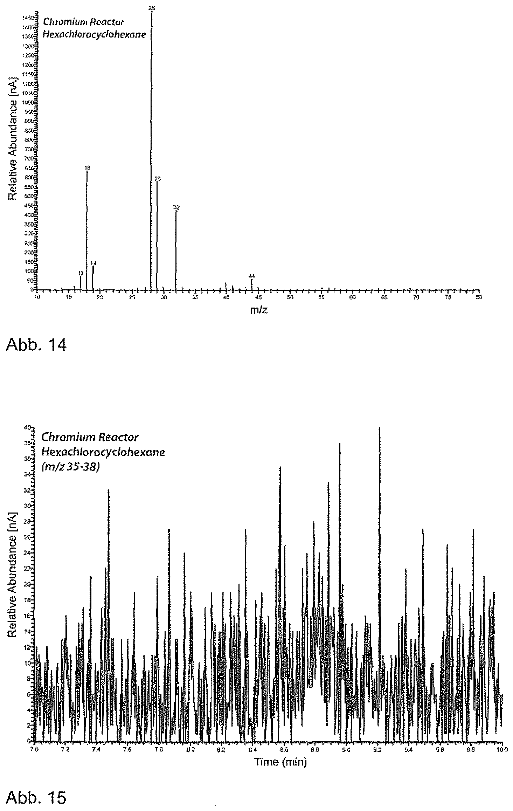

Abbildungen 14 und 15: keine H-haltige Neben-Produkt Bildung (HCl) bei der Umsetzung des Wasserstoffs im Molekül in molekularen Wasserstoff im GC-Cr-System

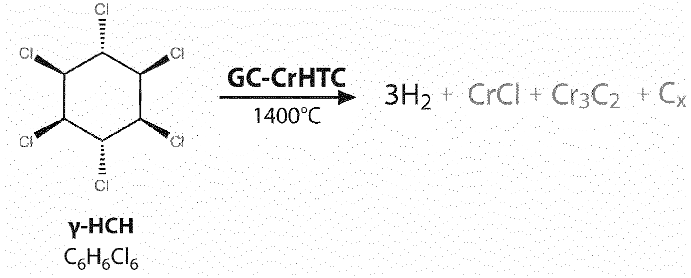

Wie man den anliegenden Abbildungen 12 und 13 entnehmen kann, führt die an sich bekannte GC/HTC zur Bildung von Nebenprodukten, die die Ausbeute von molekularem Wasserstoff auf maximal 60-70 % beschränkt.

In den Abbildungen 14 und 15 ist gezeigt, dass mit dem erfindungsgemäß verwendeten Reaktor und Verfahren eine nahezu 100%ige Ausbeute erreicht wird.

## Patentansprüche

1. Verwendung eines Reaktors, der eine Reaktorkammer mit chromenthaltendem Material aufweist, die einen Reaktorausgang besitzt, zur quantitativen Gewinnung von molekularem Wasserstoff aus festen, flüssigen oder gasförmigen Substanzen, die Heteroatome aufweisen, durch Pyrolyse, wobei zur Pyrolyse der Substanzen in dem Reaktor eine Zone mit Temperaturen oberhalb von 1100°C erzeugt wird, in der sich eine für den Pyrolyseprozess der Substanzen zugängliche reaktive Chromschicht des chromenthaltenden Materials zumindest teilweise angeordnet befindet und das durch die Pyrolyse gebildete Wasserstoffgas durch den Reaktorausgang der Reaktorkammer austritt, und wobei weiteres chromenthaltendes Material der Reaktorkammer, das zwischen dem chromenthaltenden Material der Reaktorkammer, das sich während der Pyrolyse in der Zone mit Temperaturen oberhalb von 1100°C befindet, und dem Ausgang der Reaktorkammer angeordnet ist, während der Pyrolyse in einer Temperaturzone angeordnet ist, die an die Zone mit Temperaturen oberhalb von 1100°C angrenzt und in der die Temperatur bis zu einer Temperatur von 500°C zum Reaktorausgang der Reaktorkammer hin abnimmt.

2. Verwendung eines Reaktors gemäß Patentanspruch 1, **dadurch gekennzeichnet, dass** die Temperatur der Temperaturzone, die an die Zone mit Temperaturen oberhalb von 1100°C angrenzt, bis zu einer Temperatur von 300°C zum Reaktorausgang der Reaktorkammer hin abnimmt..

3. Verwendung eines Reaktors gemäß Patentanspruch 1, **dadurch gekennzeichnet, dass** die Temperatur der Temperaturzone, die an die Zone mit Temperaturen oberhalb von 1100°C angrenzt, bis zu einer Temperatur von 180°C zum Reaktorausgang der Reaktorkammer hin abnimmt.

4. Verwendung eines Reaktors gemäß mindestens einem der Patentansprüche 1 bis 3, **dadurch gekennzeichnet, dass** die Temperatur in der Temperaturzone, die an die Zone mit Temperaturen oberhalb von 1100°C angrenzt, gleichmäßig abnimmt.

5. Verwendung eines Reaktors gemäß mindestens einem der Patentansprüche 1 bis 3, **dadurch gekennzeichnet, dass** die Temperatur in der Temperaturzone, die an die Zone mit Temperaturen oberhalb von 1100°C angrenzt, mit niedrigeren Temperaturen stärker abnimmt.

6. Verwendung eines Reaktors gemäß mindestens einem der Patentansprüche 1 bis 5, **dadurch gekennzeichnet, dass** es sich bei dem chromenthaltenden Material in beiden Temperaturzonen, der Zone mit Temperaturen oberhalb von 1100°C und der Temperaturzone, die an die Zone mit Temperaturen oberhalb von 1100°C angrenzt und in der die Temperatur zum Reaktorausgang der Reaktorkammer hin abnimmt, um das gleiche chromenthaltende Material handelt.

7. Verwendung eines Reaktors gemäß Patentanspruch 6, **dadurch gekennzeichnet, dass** das chromenthaltenden Material in beiden Temperaturzonen als eine einteilige Komponente der Reaktorkammer ausgebildet ist.

8. Verwendung eines Reaktors gemäß mindestens einem der Patentansprüche 1 bis 7, **dadurch gekennzeichnet, dass** die Reaktorkammer der Reaktors als Reaktorrohr ausgeführt ist.

9. Vorrichtung zur quantitativen Gewinnung von molekularem Wasserstoff aus festen, flüssigen oder gasförmigen Substanzen, die Heteroatome aufweisen, durch Pyrolyse beinhaltend einen Reaktor, der ein Reaktorrohr mit chromenthaltendem Material aufweist, das einen Ausgang besitzt, aus dem gebildeter Wasserstoff austreten kann, und einen Ofen, in dessen Inneren Temperaturen oberhalb von 1100°C erzeugt werden können, **dadurch gekennzeichnet, dass** das Reaktorrohr mit dem chromenthaltenden Material des Reaktors so im Inneren des Ofens angeordnet ist, dass zur Pyrolyse der Substanzen in dem Reaktor eine Zone mit Temperaturen oberhalb von 1100°C erzeugt werden kann, in der sich eine für den Pyrolyseprozess der Substanzen zugängliche reaktive Chromschicht des chromenthaltenden Materials des Reaktorrohres zumindest teilweise befindet, wobei zwischen dem chromenthaltendem Material der Reaktorrohres, das sich während der Pyrolyse in der Zone mit Temperaturen oberhalb von 1100°C befindet, und dem Ausgang der Reaktorrohres weiteres chromenthaltendes Material der Reaktorrohres in einer Zone angeordnet ist, die an die Zone mit dem Temperaturen oberhalb von 1100°C angrenzt, und der Ofen der Vorrichtung so betrieben werden kann, dass in dieser Zone während der Pyrolyse die Temperatur bis zu einer Temperatur von 500°C zum Ausgang des Reaktorrohres hin abnimmt.

10. Vorrichtung gemäß Patentanspruch 9, **dadurch gekennzeichnet, dass** der Ofen der Vorrichtung so betrieben werden kann, dass in der Zone, die an die Zone mit dem Temperaturen oberhalb von 1100°C angrenzt, während der Pyrolyse die Temperatur bis zu einer Temperatur von 300°C zum Ausgang des Reaktorrohres hin abnimmt.

11. Vorrichtung gemäß Patentanspruch 9, **dadurch gekennzeichnet, dass** der Ofen der Vorrichtung so betrieben werden kann, dass in der Zone, die an die Zone mit dem Temperaturen oberhalb von 1100°C angrenzt, während der Pyrolyse die Temperatur bis zu einer Temperatur von 180°C zum Ausgang des Reaktorrohres hin abnimmt.

12. Vorrichtung gemäß mindestens einem der Patentansprüche 9 bis 11, **dadurch gekennzeichnet, dass** der Ofen der Vorrichtung so betrieben werden kann, dass in der Zone, die an die Zone mit dem Temperaturen oberhalb von 1100°C angrenzt, während der Pyrolyse die Temperatur gleichmäßig abnimmt.

13. Vorrichtung gemäß mindestens einem der Patentansprüche 9 bis 11, **dadurch gekennzeichnet, dass** der Ofen der Vorrichtung so betrieben werden kann, dass in der Zone, die an die Zone mit dem Temperaturen oberhalb von 1100°C angrenzt, während der Pyrolyse die Temperatur mit niedrigeren Temperaturen stärker abnimmt.

14. Vorrichtung gemäß mindestens einem der Patentansprüche 9 bis 13, **dadurch gekennzeichnet, dass** es sich bei dem chromenthaltenden Material in beiden Temperaturzonen, der Zone mit Temperaturen oberhalb von 1100°C und der Temperaturzone, die an die Zone mit Temperaturen oberhalb von 1100°C angrenzt und in der die Temperatur zum Ausgang der Reaktorrohres hin abnimmt, um das gleiche chromenthaltende Material handelt.

15. Massenspektrometer mit einer Vorrichtung zur quantitativen Gewinnung von molekularem Wasserstoff aus festen, flüssigen oder gasförmigen Substanzen, die Heteroatome aufweisen, durch Pyrolyse gemäß einem der Patentansprüche 9 bis 14.

## Claims

1. Use of a reactor, which comprises a reactor chamber with material containing chromium, which has a reactor outlet for the quantitative recovery of molecular hydrogen from solid, liquid or gaseous substances comprising heteroatoms, by pyrolysis, wherein for the pyrolysis of the substances in the reactor a zone having temperatures above 1100°C is generated, in which a reactive chromium layer of the material containing chromium that is accessible for the pyrolysis process of the substances is at least partially arranged and the hydrogen gas formed by the pyrolysis exits through the reactor outlet of the reactor chamber, and wherein further material containing chromium of the reactor chamber, which is arranged between the material containing chromium of the reactor chamber that is located during the pyrolysis in the zone having temperatures above 1100°C and the outlet of the reactor chamber, is arranged during the pyrolysis in a temperature zone which adjoins the zone having temperatures above 1100°C and in which the temperature decreases to a temperature of 500°C in the direction of the reactor outlet of the reactor chamber.

2. Use of a reactor according to claim 1, **characterized in that** the temperature of the temperature zone which adjoins the zone having temperatures above 1100°C decreases to a temperature of 300°C in the direction of the reactor outlet of the reactor chamber.

3. Use of a reactor according to claim 1, **characterized in that** the temperature of the temperature zone which adjoins the zone having temperatures above 1100°C decreases to a temperature of 180°C in the direction of the reactor outlet of the reactor chamber.

4. Use of a reactor according to at least one of claims 1 to 3, **characterized in that** the temperature in the temperature zone which adjoins the zone having temperatures above 1100°C decreases uniformly.

5. Use of a reactor according to at least one of claims 1 to 3, **characterized in that** the temperature in the temperature zone which adjoins the zone having temperatures above 1100°C decreases more sharply at lower temperatures.

6. Use of a reactor according to at least one of claims 1 to 5, **characterized in that** the material containing chromium in both temperature zones, the zone having temperatures above 1100°C and the temperature zone which adjoins the zone having temperatures above 1100°C and in which the temperature decreases in the direction of the reactor outlet of the reactor chamber, is the same material containing chromium.

7. Use of a reactor according to claim 6, **characterized in that** the material containing chromium in both temperature zones is formed as a one-piece component of the reactor chamber.

8. Use of a reactor according to at least one of claims 1 to 7, **characterized in that** the reactor chamber of the reactor is designed as a reactor tube.

9. Device for the quantitative recovery of molecular hydrogen from solid, liquid or gaseous substances comprising heteroatoms, by pyrolysis, which comprises a reactor comprising a reactor tube with material containing chromium which has an outlet from which the formed hydrogen can exit, and a furnace, in the interior of which temperatures above 1100°C can be generated, **characterized in that** the reactor tube with the material containing chromium of the reactor is arranged inside the furnace in such a way that for the pyrolysis of the substances in the reactor a zone having temperatures above 1100°C can be generated, in which a reactive chromium layer of the material containing chromium of the reactor tube, which chromium layer is accessible for the pyrolysis process of the substances, is at least partially located, wherein between the material containing chromium of the reactor tube which is located in the zone having temperatures above 1100°C during the pyrolysis and the outlet of the reactor tube, further material containing chromium of the reactor tube is arranged in a zone adjoining the zone having the temperatures above 1100°C, and the furnace of the device can be operated in such a way that during the pyrolysis in this zone the temperature decreases to a temperature of 500°C in the direction of the outlet of the reactor tube.

10. Device according to claim 9, **characterized in that** the furnace of the device can be operated in such a way that in the zone adjoining the zone having temperatures above 1100°C, the temperature decreases during the pyrolysis to a temperature of 300°C in the direction of the outlet of the reactor tube.

11. Device according to claim 9, **characterized in that** the furnace of the device can be operated in such a way that in the zone adjoining the zone having temperatures above 1100°C, the temperature decreases during the pyrolysis to a temperature of 180°C in the direction of the outlet of the reactor tube.

12. Device according to at least one of claims 9 to 11, **characterized in that** the furnace of the device can be operated in such a way that in the zone adjoining the zone having temperatures above 1100°C, the temperature decreases uniformly during the pyrolysis.

13. Device according to at least one of claims 9 to 11, **characterized in that** the furnace of the device can be operated in such a way that in the zone adjoining the zone having temperatures above 1100°C, the temperature decreases more sharply at lower temperatures during the pyrolysis.

14. Device according to at least one of claims 9 to 13, **characterized in that** the material containing chromium in both temperature zones, the zone having temperatures above 1100°C and the temperature zone which adjoins the zone having temperatures above 1100°C and in which the temperature decreases in the direction of the outlet of the reactor tube, is the same material containing chromium.

15. Mass spectrometer comprising a device for the quantitative recovery of molecular hydrogen from solid, liquid or gaseous substances comprising heteroatoms, by pyrolysis, according to one of claims 9 to 14.

## Revendications

1. Utilisation d'un réacteur présentant une chambre de réacteur comportant un matériau contenant du chrome et possédant une sortie de réacteur, pour la récupération quantitative d'hydrogène moléculaire par pyrolyse à partir de substances solides, liquides ou gazeuses présentant des hétéroatomes, une zone comportant des températures supérieures à 1100 °C étant générée dans le réacteur pour la pyrolyse des substances, dans laquelle zone une couche de chrome réactive du matériau contenant du chrome accessible pour le processus de pyrolyse des substances est disposée au moins partiellement, et le gaz hydrogène formé par la pyrolyse sortant par la sortie de réacteur de la chambre de réacteur, et un autre matériau contenant du chrome de la chambre de réacteur étant disposé entre le matériau contenant du chrome de la chambre de réacteur, lequel se trouve dans la zone comportant des températures supérieures à 1100 °C pendant la pyrolyse, et la sortie de la chambre de réacteur, et étant disposé pendant la pyrolyse dans une zone de température qui borde la zone comportant des températures supérieures à 1100 °C et dans laquelle la température diminue jusqu'à une température de 500 °C vers la sortie de réacteur de la chambre de réacteur.

2. Utilisation d'un réacteur selon la revendication 1, **caractérisée en ce que** la température de la zone de température qui borde la zone comportant des températures supérieures à 1100 °C diminue jusqu'à une température de 300 °C vers la sortie de réacteur de la chambre de réacteur.

3. Utilisation d'un réacteur selon la revendication 1, **caractérisée en ce que** la température de la zone de température qui borde la zone comportant des températures supérieures à 1100 °C diminue jusqu'à une température de 180 °C vers la sortie de réacteur de la chambre de réacteur.

4. Utilisation d'un réacteur selon au moins l'une des revendications 1 à 3, **caractérisée en ce que** la température dans la zone de température qui borde la zone comportant des températures supérieures à 1100 °C diminue uniformément.

5. Utilisation d'un réacteur selon au moins l'une des revendications 1 à 3, **caractérisée en ce que** la température dans la zone de température qui borde la zone comportant des températures supérieures à 1100 °C diminue plus fortement avec des températures plus faibles.

6. Utilisation d'un réacteur selon au moins l'une des revendications 1 à 5, **caractérisée en ce que** le matériau contenant du chrome est contenu dans deux zones de température, la zone comportant des températures supérieures à 1100 °C et la zone de température qui borde la zone comportant des températures supérieures à 1100 °C et dans laquelle la température diminue vers la sortie de réacteur de la chambre de réacteur, afin qu'elles contiennent le même matériau contenant du chrome.

7. Utilisation d'un réacteur selon la revendication 6, **caractérisée en ce que** le matériau contenant du chrome est formé comme un composant monobloc de la chambre de réacteur dans les deux zones de température.

8. Utilisation d'un réacteur selon au moins l'une des revendications 1 à 7, **caractérisée en ce que** la chambre de réacteur du réacteur est réalisée sous la forme d'un tube de réacteur.

9. Dispositif permettant la récupération quantitative d'hydrogène moléculaire par pyrolyse à partir de substances solides, liquides ou gazeuses présentant des hétéroatomes, comprenant un réacteur qui présente un tube de réacteur comportant un matériau contenant du chrome, lequel tube de réacteur possède une sortie par laquelle de l'hydrogène formé peut s'échapper, et un four, dans l'espace intérieur duquel des températures supérieures à 1100 °C peuvent être générées, **caractérisé en ce que** le tube de réacteur est disposé avec le matériau contenant du chrome du réacteur dans l'espace intérieur du four de telle manière qu'une zone comportant des températures supérieures à 1100 °C peut être générée pour la pyrolyse des substances dans le réacteur, dans laquelle zone une couche de chrome réactive du matériau contenant du chrome du tube de réacteur accessible pour le processus de pyrolyse des substances est située au moins partiellement, un autre matériau contenant du chrome étant disposé entre le matériau contenant du chrome du tube de réacteur, lequel se trouve dans la zone comportant des températures supérieures à 1100 °C pendant la pyrolyse, et la sortie du tube de réacteur, dans une zone qui borde la zone comportant des températures supérieure à 1100 °C, et le four du dispositif pouvant être actionné de telle manière que la température dans ladite zone diminue jusqu'à une température de 500 °C vers la sortie du tube de réacteur pendant la pyrolyse.

10. Dispositif selon la revendication 9, **caractérisé en ce que** le four du dispositif peut être actionné de telle manière que dans la zone qui borde la zone comportant des températures supérieures à 1100 °C, la température diminue jusqu'à une température de 300 °C vers la sortie du tube de réacteur pendant la pyrolyse.

11. Dispositif selon la revendication 9, **caractérisé en ce que** le four du dispositif peut être actionné de telle manière que dans la zone qui borde la zone comportant des températures supérieures à 1100 °C, la température diminue jusqu'à une température de 180 °C vers la sortie du tube de réacteur pendant la pyrolyse.

12. Dispositif selon au moins l'une des revendications 9 à 11, **caractérisé en ce que** le four du dispositif peut être actionné de telle manière que dans la zone qui borde la zone comportant des températures supérieures à 1100 °C, la température diminue uniformément pendant la pyrolyse.

13. Dispositif selon au moins l'une des revendications 9 à 11, **caractérisé en ce que** le four du dispositif peut être actionné de telle manière que dans la zone qui borde la zone comportant des températures supérieures à 1100 °C, la température diminue plus fortement avec des températures plus basses pendant la pyrolyse.

14. Dispositif selon au moins l'une des revendications 9 à 13, **caractérisé en ce que** le matériau contenant du chrome est contenu dans deux zones de température, la zone comportant des températures supérieures à 1100 °C et la zone de température qui borde la zone comportant des températures supérieures à 1100 °C, et dans laquelle la température diminue vers la sortie du tube de réacteur, afin qu'elles contiennent le même matériau contenant du chrome.

15. Spectromètre de masse comportant un dispositif permettant la récupération quantitative d'hydrogène moléculaire par pyrolyse à partir de substances solides, liquides ou gazeuses présentant des hétéroatomes selon l'une des revendications 9 à 14.
